(19) **Europäisches Patentamt / European Patent Office / Office européen des brevets**

(11) **EP 4 650 388 A1**

(12) # EUROPEAN PATENT APPLICATION

(43) Date of publication:
**19.11.2025 Bulletin 2025/47**

(21) Application number: **24175456.3**

(22) Date of filing: **13.05.2024**

(51) International Patent Classification (IPC):
**C08J 5/18** *(2006.01)*    **C08L 29/04** *(2006.01)*
**C11D 17/04** *(2006.01)*

(52) Cooperative Patent Classification (CPC):
(C-Sets available)
**C08J 5/18; C08L 29/04; C11D 17/042;**
C08F 216/06; C08J 2329/04; C08L 2205/025
(Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **MonoSol, LLC**
**Merrillville, Indiana 46410 (US)**

(72) Inventors:
• **SANATKARAN, Neda**
  **Pittsburgh, 15216 (US)**
• **LI, Shigeng**
  **Naperville, 60564 (US)**
• **COURCHAY, Florence Catherine**
  **1853 Strombeek-bever, Brussels (BE)**

(74) Representative: **Zacco Sweden AB**
**P.O. Box 5581**
**Löjtnantsgatan 21**
**114 85 Stockholm (SE)**

(54) **SOLUBLE FILMS, FILM ARTICLES, AND METHODS OF MAKING AND USING SAME**

(57)    Water-soluble films, water-soluble unit dose articles, and methods of their manufacture and use. The film includes a polyvinyl alcohol resin blend comprising a PVOH homopolymer consisting essentially of vinyl alcohol monomer units and vinyl acetate monomer units and a PVOH copolymer comprising anionic monomer units, vinyl alcohol monomer units and vinyl acetate monomer units.

**Figure 1**

(52) Cooperative Patent Classification (CPC): (Cont.)

C-Sets
**C08L 29/04, C08L 29/04, C08K 5/053;**
C08F 216/06, C08F 218/08, C08F 222/02

**Description**

## BACKGROUND

**Field of the Disclosure**

Water-soluble films, water-soluble unit dose articles, and methods of their manufacture and use.

**Brief Description of Related Technology**

Water-soluble unit dose articles are liked by consumers as they are convenient and efficient to use. Such water-soluble unit dose articles often comprise detergent compositions. Without wishing to be bound by theory, when the water-soluble unit dose article is added to water, the film dissolves/disintegrates releasing the internal contents into the surrounding water to create a wash liquor. The water soluble film used must meet the dual criteria of providing sufficient strength such that the film does not rip or tear resulting in premature rupture of the water-soluble unit dose article during storage and transport, but also adequately dissolves during the wash cycle to minimize unwanted film residues at the end of the wash operation. Films comprised of polyvinyl alcohol (PVOH) have been used to meet these needs. A preferred method of making such unit dose articles is to deform a first water-soluble film into a mould to create an open cavity, fill the open cavity with a detergent composition, then close the open cavity with a second water-soluble film and seal the first and second water-soluble films together to create the water-soluble unit dose article.

Fast dissolution of the articles is highly desirable; however, in some cases the interaction between a detergent and the polyvinyl alcohol during initial dissolution and contact with water can give rise to gelling that slows down further dissolution, leading to a delay in the cleaning onset and in some cases leaving residues on the treated items. This is more acute in cases in which the cleaning process takes place in short and cold temperature cleaning programs. When the water-soluble unit dose detergent article is used in a laundry process, residues can be deposited on fabrics or the washing machine. The residues can generally be redissolved, though this might require a further step from the user.

## SUMMARY

One aspect of the disclosure provides a water-soluble film including a polyvinyl alcohol resin blend comprising a PVOH homopolymer consisting essentially of vinyl alcohol monomer units and vinyl acetate monomer units and a PVOH copolymer comprising anionic monomer units, vinyl alcohol monomer units and vinyl acetate monomer units, wherein the PVOH homopolymer has a viscosity in a range of 10 cP to 30 cP, and a degree of hydrolysis (DH) in a range of 60% to 84%, wherein the PVOH copolymer has a viscosity in a range of 5 cP to less than 10 cP, a DH in a range of 60% to 89%, and an anionic monomer content of 0.1 mol% to 4 mol%, wherein the PVOH homopolymer is present in an amount in a range of 10% to 90%, by weight of the polyvinyl alcohol resin blend, and wherein the PVOH copolymer is present in an amount in a range of 10% to 90% by weight of the polyvinyl alcohol resin blend.

Another aspect of the disclosure provides a water-soluble unit dose article comprising a water-soluble film according to the disclosure, wherein the unit dose article comprises a compartment and optionally a composition contained in the compartment.

Additional aspects of the disclosure relate to methods of making the films and unit dose articles.

For the compositions and methods described herein, optional features, including but not limited to components, compositional ranges thereof, substituents, conditions, and steps, are contemplated to be selected from the various aspects, embodiments, and examples provided herein.

## BRIEF DESCRIPTION OF THE DRAWINGS

For further facilitating the understanding of the present invention, two drawing figures are appended hereto.

Figure 1 shows an apparatus used to carry out the Gelling Factor (G) method.

Figure 2 shows a schematic illustration of the apparatus used to carry out the Pouch Strength method.

Figure 3 shows a graph of tensile strength values for films based on PVOH resins of various viscosities.

Figure 4 shows mechanical testing results (force vs. displacement) for a film according to the invention and a comparative film.

## DETAILED DESCRIPTION

Described below are inventive water-soluble films based on PVOH resin blends. Further described below are methods of film making applicable to each of the two types of water-soluble films, methods of making articles such as packets applicable to each of the two types of water-soluble films, and related articles themselves.

As used herein, the articles including "the," "a" and "an" when used in a claim or in the specification, are understood to mean one or more of what is claimed or described.

As used herein, the terms "include," "includes" and "including" are meant to be non-limiting.

"Comprising" as used herein means that various components, ingredients or steps that can be conjointly employed in practicing the present disclosure. Accordingly, the term "comprising" encompasses the more restrictive terms "consisting essentially of" and "consisting of." The present compositions can comprise, consist essentially of, or consist of any of the required and optional elements disclosed herein. For example, a thermoformed packet can "consist essentially of" a film described herein for use of its thermoforming characteristics, while including a non-thermoformed film (e.g., lid portion), and optional markings on the film, e.g., by inkjet printing. The invention illustratively disclosed herein suitably may be practiced in the absence of any element or step which is not specifically disclosed herein.

All percentages, parts and ratios referred to herein are based upon the total dry weight of the film composition or total weight of the packet content composition of the present disclosure, as the case may be, and all measurements made are at about 25°C, unless otherwise specified. All such weights as they pertain to listed ingredients are based on the active level and therefore do not include carriers or by-products that may be included in commercially available materials, unless otherwise specified.

All ranges set forth herein include all possible subsets of ranges and any combinations of such subset ranges. By default, ranges are inclusive of the stated endpoints, unless stated otherwise. Where a range of values is provided, it is understood that each intervening value between the upper and lower limit of that range and any other stated or intervening value in that stated range, is encompassed within the disclosure. The upper and lower limits of these smaller ranges may independently be included in the smaller ranges, and are also encompassed within the disclosure, subject to any specifically excluded limit in the stated range. Where the stated range includes one or both of the limits, ranges excluding either or both of those included limits are also contemplated to be part of the disclosure.

It is expressly contemplated that for any number value described herein, e.g., as a parameter of the subject matter described or part of a range associated with the subject matter described, an alternative which forms part of the description is a functionally equivalent range surrounding the specific numerical value (e.g., for a dimension disclosed as "40 mm" an alternative embodiment contemplated is "about 40 mm").

As used herein, the terms packet(s) and pouch(es) should be considered interchangeable. In certain embodiments, the terms packet(s) and pouch(es), respectively, are used to refer to a container made using the film, and to a fully-sealed container preferably having a material sealed therein, e.g., in the form a measured dose delivery system. The sealed pouches can be made from any suitable method, including such processes and features such as heat sealing, solvent welding, and adhesive sealing (e.g., with use of a water-soluble adhesive).

As used herein and unless specified otherwise, the terms "wt.%" and "wt%" are intended to refer to the composition of the identified element in "dry" (non-water) parts by weight of the entire film, including residual moisture in the film (when applicable) or parts by weight of the entire composition enclosed within a pouch (when applicable).

As used herein and unless specified otherwise, the term "PHR" ("PHR") is intended to refer to the composition of the identified element in parts per one hundred parts water-soluble polymer resin (whether PVOH or other polymer resins, unless specified otherwise) in the water- soluble film, or a solution used to make the film.

To be considered a water-soluble film according to the present disclosure, the film, at a thickness of about 1.5 mil (about 0.038 mm), dissolves in 300 seconds or less in water at a temperature of 20°C (68°F) in accordance with MonoSol Test Method MSTM-205.

The film can be made by any suitable method, including a solution casting method. The film can be used to form a container (pouch) by any suitable process, including vertical form, fill, and sealing (VFFS), or thermoforming. The film can be sealed by any suitable process including, for example, solvent sealing or heat sealing of film layers, e.g., around a periphery of a container. The pouches can be used for dosing materials to be delivered into bulk water, for example.

The film, pouches, and related methods of making and use are contemplated to include embodiments including any combination of one or more of the additional optional elements, features, and steps further described below (including those shown in the Examples and Figures), unless stated otherwise.

### Water-Soluble Films

PVOH is a synthetic resin generally prepared by the alcoholysis, usually termed hydrolysis or saponification, of polyvinyl acetate. Fully hydrolyzed PVOH, where virtually all the acetate groups have been converted to alcohol groups, is a strongly hydrogen-bonded, highly crystalline polymer which dissolves only in hot water- greater than about 140 °F (about 60 °C). If a sufficient number of acetate groups are allowed to remain after the hydrolysis of polyvinyl acetate, that is, the PVOH polymer is partially hydrolyzed, then the polymer is more weakly hydrogen-bonded, less crystalline, and can be soluble in cold water, e.g., less than about 50 °F (about 10 °C). As such, the partially hydrolyzed polymer is a vinyl alcohol-vinyl acetate copolymer that is a PVOH copolymer, but is commonly referred to as PVOH homopolymer.

The term PVOH copolymer is generally used to describe polymers that are derived by the hydrolysis of a copolymer of a vinyl ester, typically vinyl acetate, and another monomer. PVOH copolymers can be tailored to desired film characteristics by varying the kind and quantity of copolymerized monomers. Examples of copolymerizations are those of vinyl acetate with a carboxylic acid or with an ester of a carboxylic acid. Again, if the hydrolysis of acetate groups in these copolymers is only partial, then the resulting polymer could be described as a PVOH terpolymer-having vinyl acetate, vinyl alcohol, and carboxylic acid groups-although it is commonly referred to as a PVOH copolymer.

The viscosity of a PVOH polymer is determined by measuring a freshly made solution using a Brookfield LV type viscometer with UL adapter as described in British Standard ENISO 15023-2:2006 Annex E Brookfield Test method. It is international practice to state the viscosity of 4% (w/v) aqueous PVOH solutions at 20°C. All viscosities specified herein in Centipoise (cP) should be understood to refer to the viscosity of 4% (w/v) aqueous PVOH solution at 20°C, unless specified otherwise. It is well known in the art that the viscosity of PVOH is correlated with the weight average molecular weight ($\overline{M}_w$) of the PVOH resin, and often the viscosity is used as a proxy for the weight average molecular weight.

Homopolymer - Anionic Copolymer Blend

In one aspect, the water-soluble film comprises a PVOH resin blend comprising a PVOH homopolymer and a PVOH copolymer containing anionic monomer units.

The PVOH homopolymer can have a viscosity in a range of 10 cP to 30 cP, or 10 cP to 20 cP. The PVOH homopolymer can have a viscosity of 10 cP, or 11 cP, or 12 cP, or 13 cP, or 14 cP, or 15 cP, or 16 cP, or 17 cP, or 18 cP, or 19 cP, or 20 cP, or 22 cP, or 24 cP, or 26 cP, for example, or within a range formed by any such values as endpoints.

The PVOH homopolymer can have a DH in a range of 60% to 84%, or 65% to 84%, or 68% to 84%, or 74% to 84%, or 74% to 79%, or 70% to less than 80%, or 72% to less than 80%, or 75% to less than 80%. The PVOH homopolymer can have a DH of or 65%, or 66%, or 67%, or 68%, or 69%, or 70%, or 71%, or 72%, or 73%, or 74%, or 75%, or 76%, or 77%, or 78%, or 79%, or 80%, or 82%, or 84%, for example, or within a range formed by any such values as endpoints.

The PVOH homopolymer can have a biodegradation rate of at least 60% after 60 days, or at least 65% after 60 days, or at least 70% after 60 days, or at least 50% after 28 days, or at least 55% after 28 days, or at least 60% after 28 days, according to OECD 301B testing. A suitable PVOH homopolymer can be selected by viscosity and DH, e.g., based on the results shown in Example 4 and/or through routine testing according to OECD 301B.

The PVOH homopolymer is present in the water-soluble film an amount in a range of 10% to 90%, or 51% to 90%, or 70% to 90%, or 80% to 90%, by weight of the PVOH resin blend. The PVOH homopolymer can be present in the water-soluble film an amount of 51%, or 55%, or 60%, or 65%, or 70%, or 75%, or 80%, or 81%, or 82%, or 83%, or 84%, or 85%, or 86%, or 87%, or 88%, or 90%, by weight of the PVOH resin blend, for example, or within a range formed by any such values as endpoints.

The polyvinyl alcohol polymer blend can comprise from 80% to 90% by weight of the polyvinyl alcohol polymer blend of the PVOH homopolymer and the PVOH homopolymer can have an average degree of hydrolysis of from 75% to less than 80% and has a 4% solution viscosity at 20 °C of from 10 cP to 20 cP.

The PVOH copolymer can have a viscosity in a range of 5 cP to less than 10 cP, or 5 cP to 9 cP. The PVOH copolymer can have a viscosity of 5 cP, or 6 cP, or 7 cP, or 8 cP, or 9 cP, or 9.5 cP, for example, or within a range formed by any such values as endpoints.

The average viscosity of the PVOH resin blend comprising the PVOH homopolymer and PVOH copolymer can be at least 9 cP, or at least 10 cP, or at least 12 cP, or in a range of 9 cP to 15 cP, or 10 cP to 15 cP, or 12 cP to 14 cP. The average viscosity of the PVOH resin blend comprising the PVOH homopolymer and PVOH copolymer can be 9 cP, or 10 cP, or 11 cP, or 12 cP, or 12.5 cP, or 13 cP, or 13.5 cP, or 14 cP, or 15 cP, for example, or within a range formed by any such values as endpoints.

The PVOH copolymer can have a DH in a range of 60% to 89%, or 60% to 84%, or 65% to 84%, or 68% to 84%, or 74% to 84%, or 74% to 89%, or 74% to 79%, or 60% to less than 80%, or 70% to less than 80%, or 75% to less than 80%. The PVOH copolymer can have a DH of or 65%, or 66%, or 67%, or 69%, or 69%, or 70%, or 71%, or 72%, or 73%, or 74%, or 75%, or 76%, or 77%, or 78%, or 79%, or 80%, or 82%, or 84%, for example, or within a range formed by any such values as endpoints.

The average DH of the PVOH resin blend comprising the PVOH homopolymer and PVOH copolymer can be less than 84%, or less than 80%, or less than 75%, or in a range of 74 to 85%. The average DH of the PVOH resin blend comprising the PVOH homopolymer and PVOH copolymer can be 74%, or 75%, or 76%, or 77%, or 78%, or 79%, or 79.5%, for example, or within a range formed by any such values as endpoints.

The difference between the DH of the PVOH homopolymer and the DH of the PVOH copolymer, expressed as |DHH-DHC|, can be less than 10%, or less than 5%. |DHH-DHC| can be 9.5%, or 9%, or 8.5%, or 8%, or 7.5%, or 7%, or 6.5%, or 6%, or 5.5%, or 5%, or 4.5%, or 4%, or 3%, or 2%, or 1%, or 0%, for example, or within a range formed by any such values as endpoints. When the DH of the PVOH homopolymer and PVOH copolymer are similar to each other, the resulting resin blend forms a more homogenous mixture in the film.

The PVOH copolymer can have an anionic monomer content of 0.1 mol% to 4.0 mol%, or 0.5 mol% to 4 mol%, or 3 mol% to 4 mol%, or 1 mol% to 2 mol%, or less than 4 mol%, less than 3 mol%, less than 2 mol%, or less than 1.77 mol%, or less than 1.5 mol%. The PVOH copolymer can have an anionic monomer content of 0.5 mol%, or 0.75 mol%, or 1 mol%, or 1.25 mol%, or 1.5 mol%, or 1.75 mol%, or 2%, or 3%, or 4%, for example, or within a range formed by any such values as endpoints. The values are contemplated for any anionic monomer unit, including itaconic acid.

The polyvinyl alcohol polymer blend can comprise from 10% to 20%, by weight of the polyvinyl alcohol polymer blend, of the PVOH copolymer.

The PVOH copolymer can comprise an anionic monomer unit derived from itaconic acid. The anionic monomer unit can be present in an amount in a range of 1.0 mol% to 2.0 mol%.

Preferably, the PVOH copolymer has an average degree of hydrolysis of from 75% to less than 80%. Preferably, the PVOH copolymer has a 4% solution viscosity at 20°C in a range of 3 cP to 10 cP.

The polyvinyl alcohol blend can comprise from 10% to 20%, by weight of the polymer blend, of the PVOH copolymer and the PVOH copolymer can have from 1.0 mol% to 2.0 mol% of an anionic monomer unit derived from itaconic acid, an average degree of hydrolysis in a range of 75% to less than 80%, and a 4% solution viscosity at 20 °C in a range of 3 cP to 10 cP.

The PVOH copolymer can have a biodegradation rate of at least 60% after 60 days, or at least 65% after 60 days, or at least 70% after 60 days, or at least 50% after 28 days, or at least 55% after 28 days, or at least 60% after 28 days, according to OECD 301B testing. A suitable PVOH copolymer can be selected by the type and amount of anionic monomer content, e.g., based on the results shown in Example 4 and/or through routine testing according to OECD 301B.

The PVOH copolymer is present in the water-soluble film in an amount in a range of 10% to 90%, or 10% to 49%, or 10% to 30%, or 5% to 25%, or 10% to 20%, by weight of the PVOH resin blend. The PVOH copolymer can be present in the water-soluble film an amount of 10%, or 11%, or 12%, or 13%, or 14%, or 15%, or 16%, or 17%, or 18%, or 19%, or 20%, or 22%, or 24%, or 26%, or 28%, or 30%, by weight of the PVOH resin blend, for example, or within a range formed by any such values as endpoints.

The anionic monomer unit of the PVOH copolymer can be derived from one or more members in the group of monocarboxylic acid vinyl monomers, their esters and anhydrides, dicarboxylic monomers having a polymerizable double bond, their esters and anhydrides, vinyl sulfonic acid monomers, and alkali metal salts of any of the foregoing. The anionic monomer unit of the PVOH copolymer can be derived from one or more members in the group of monocarboxylic acid vinyl monomers, their esters and anhydrides, dicarboxylic monomers having a polymerizable double bond, their esters and anhydrides, and alkali metal salts of any of the foregoing. The anionic monomer unit of the PVOH copolymer can be derived from one or more members in the group of, itaconic acid, monomethyl itaconate, dimethyl itaconate, itaconic anhydride, alkali metal salts thereof, and esters thereof. The anionic monomer unit of the PVOH copolymer can be derived from one or more members in the group of, acrylate, a methacrylate, a maleate, or a mixture thereof. For example, from the group of, monomethyl maleate, dimethyl maleate, methacrylate, maleic anhydride, or mixtures thereof.

The PVOH resin blend comprising the PVOH homopolymer and PVOH copolymer can have a biodegradation rate of at least 60% after 60 days, or at least 65% after 60 days, or at least 70% after 60 days, or at least 50% after 28 days, or at least 55% after 28 days, or at least 60% after 28 days, according to OECD 301B testing, e.g., by blending types and amounts of the PVOH homopolymer and PVOH copolymer. The film comprising the PVOH resin blend comprising the PVOH homopolymer and PVOH copolymer can have a biodegradation rate of at least 60% after 60 days, or at least 60% after 28 days according to OECD 301B testing, e.g., by choosing secondary film additives together with the PVOH resin blend.

The film can be characterized by having a gelling factor, measured as the gelling factor of an aqueous solution of the film and a detergent composition, of less than 1.25, or less than 1.2, or less than 1.15, as measured according to the test method described herein.

The water-soluble film comprising the PVOH resin blend comprising the PVOH homopolymer and PVOH copolymer can have a tensile strength, as determined by the Tensile Strength Test described below, of at least 36 MPa, or at least 38 MPa, or at least 40 MPa. The water-soluble film comprising the PVOH resin blend comprising the PVOH homopolymer and PVOH copolymer can have a tensile strength of 36 MPa, or 37 MPa, or 38 MPa, or 39 MPa, or 40 MPa, or 41 MPa, or 42 MPa, or 43 MPa, or 44 MPa, or 45 MPa, or 46 MPa, or 48 MPa, or 50 MPa, or 55 MPa, or higher, for example, or within a range formed by any such values as endpoints.

The water-soluble film comprising the PVOH resin blend comprising the PVOH homopolymer and PVOH copolymer can be characterized by 100% modulus value of at least about 20 N/mm$^2$ as measured by the Modulus (MOD) Test at 35% RH. Generally, higher modulus values are desirable because they correspond to pouches having a greater stiffness and a lower likelihood of deforming and sticking to each other when loaded on top of each other during production or in final consumer packaging. Further, modulus values at 10% elongation correspond to the ability of the film to maintain stiffness rather than loosen and droop when in contact with liquid pouch contents. In particular, films having higher modulus values correspond to pouches that are less likely to soften and take on a loose and droopy appearance when in contact with liquid pouch contents comprising a low molecular weight polyol.

The water-soluble film comprising the PVOH resin blend comprising the PVOH homopolymer and PVOH copolymer can have a residue value of 60 wt.% or less, as measured by the Dissolution Chamber Test described below, after 5 minutes in room temperature water, of 58 wt.% or less, or 56 wt.% or less, or 54 wt.% or less. The water-soluble film comprising the PVOH resin blend comprising the PVOH homopolymer and PVOH copolymer can have a residue value of 56 wt.%, or 55 wt.%, or 54 wt.%, or 53 wt.%, or 52 wt.%, or 51 wt.%, or 50 wt.%, or 49 wt.%, or 48 wt.%, or 47 wt.%, or 46 wt.%, or 45 wt.%, or lower as measured by the Dissolution Chamber Test described below, after 5 minutes in room temperature water, for example, or within a range formed by any such values as endpoints.

The water-soluble film comprising the PVOH resin blend comprising the PVOH homopolymer and PVOH copolymer can have a residue value of 60 wt.% or less, as measured by the Dissolution Chamber Test described below, after 5 minutes in 5 °C water, of 68 wt.% or less, or 66 wt.% or less, or 64 wt.% or less. The water-soluble film comprising the PVOH resin blend comprising the PVOH homopolymer and PVOH copolymer can have a residue value of 66 wt.%, or 65 wt.%, or 64 wt.%, or 63 wt.%, or 62 wt.%, or 61 wt.%, or 60 wt.%, or 59 wt.%, or 58 wt.%, or 57 wt.%, or 56 wt.%, or 55 wt.%, or lower, as measured by the Dissolution Chamber Test described below, after 5 minutes in 5 °C water, for example, or within a range formed by any such values as endpoints.

The water-soluble film comprising the PVOH resin blend comprising the PVOH homopolymer and PVOH copolymer can have a dissolution time of less than 120 seconds, or less than 90 seconds, less than 80 seconds, less than 70 seconds, less than 60 seconds, or less than 59 seconds, according to MSTM-205 at 5°C for a 76 micron thick film. The water-soluble film comprising the PVOH resin blend comprising the PVOH homopolymer and PVOH copolymer can have a dissolution time, according to MSTM-205 at 5°C for a 76 micron thick film, of 110 seconds, or 100 seconds, or 90 seconds, or 80 seconds, or 70 seconds, or 60 seconds, or 59 seconds, or 58 seconds, or 57 seconds, or 56 seconds, or 55 seconds, or 54 seconds, or 53 seconds, or 52 seconds, or 51 seconds, or 50 seconds, or 45 seconds, or 40 seconds, or 35 seconds, or 30 seconds, for example, or within a range formed by any such values as endpoints.

The PVOH resin blend comprising the PVOH homopolymer and PVOH copolymer can be present in the water-soluble film in an amount in a range of about 50% to about 95%, or about 50% to about 80%, or about 60% to about 75%, by weight of the water-soluble film. The PVOH resin blend comprising the PVOH homopolymer and PVOH copolymer can be present in the water-soluble film in an amount of or 50 wt.%, or 55 wt.%, or 60 wt.%, or 65 wt.%, or 70 wt.%, or 75 wt.%, or 80 wt.%, or 85 wt.%, or 90 wt.%, or 95 wt.%, for example, or within a range formed by any such values as endpoints.

Common features

The water-soluble film comprising a PVOH resin blend comprising a PVOH homopolymer and a PVOH copolymer containing anionic monomer units can have any of the additional features and secondary additives as described below.

A water-soluble film can have any suitable thickness, and a film thickness of about 76 microns ($\mu$m) is typical and particularly contemplated. Other values and ranges contemplated include values in a range of about 5 to about 200 $\mu$m, or in a range of about 20 to about 100 $\mu$m, or about 40 to about 90 $\mu$m, or about 50 to about 80 $\mu$m, or about 60 to about 65 $\mu$m for example 65 $\mu$m, 76 $\mu$m, or 88 $\mu$m.

Additives

A water-soluble film can comprise one or more additives selected from the group consisting of plasticizers, plasticizer compatibilizers, lubricants, release agents, fillers, extenders, cross-linking agents, antiblocking agents, antioxidants, detackifying agents, antifoams, nanoparticles, bleaching agents, aversive agents, surfactants, and combinations thereof.

Plasticizers

A water-soluble film can comprise one or more plasticizers in an amount in a range of about 5% to about 50%, or about 10% to about 40%, or about 20% to about 30% by weight of the water-soluble film. The plasticiser in a water-soluble film optionally can be selected from polyols, sugar alcohols, or a mixture thereof, e.g., wherein the polyols include polyols selected from the group consisting of glycerol, diglycerin, ethylene glycol, diethylene glycol, triethyleneglycol, tetraethylene glycol, polyethylene glycols up to 400 MW, neopentyl glycol, 1,2-propylene glycol, 1,3-propanediol, dipropylene glycol, polypropylene glycol, 2-methyl-1,3-propanediol, trimethylolpropane and polyether polyols, or a mixture thereof, wherein sugar alcohols can include sugar alcohols selected from the group consisting of isomalt, maltitol, sorbitol, xylitol, erythritol, adonitol, dulcitol, pentaerythritol and mannitol, or a mixture thereof. The plasticizer can be selected from the group consisting of sorbitol, glycerol, dipropyleneglycol, polyethyleneglycol, trimethylolpropane, and mixtures thereof. The plasticizer can include a mixture of glycerol, dipropylene glycol, and sorbitol.

Lubricants / Release Agents

A water-soluble film optionally can comprise lubricants / release agents. Suitable lubricants/release agents can include, but are not limited to, fatty acids and their salts, fatty alcohols, fatty esters, fatty amines, fatty amine acetates and fatty amides. Lubricants/release agents can be selected from fatty acids, fatty acid salts, and fatty amine acetates. The amount of lubricant/release agent in a water-soluble film optionally can be in a range in a range of about 0.02% to about 1.5%, or about 0.1% to about 1% by weight of the water-soluble film.

Surfactants

A water-soluble film optionally can comprise a surfactant content in a range of about 0.1% to about 3.5%, or about 0.1% to about 2.5%, or in a range of about 1% to about 2%, or in a range of about 0.5% to about 2% by weight of the water-soluble film. Suitable surfactants can include the nonionic, cationic, anionic and zwitterionic classes. Suitable surfactants include, but are not limited to nonionics, including but not limited to polyoxyethylenated polyoxypropylene glycols, alcohol ethoxylates, alkylphenol ethoxylates, tertiary acetylenic glycols and alkanolamides; cationics, including but not limited to polyoxyethylenated amines, quaternary ammonium salts and quaternized polyoxyethylenated amines; and zwitterionics, including but not limited to amine oxides, N-alkylbetaines and sulfobetaines. For example, a nonionic surfactant can be selected from alcohol ethoxylates; a cationic surfactant can be selected from quaternary ammonium salts; and a zwitterionic surfactant can be selected from amine oxides. Other suitable surfactants include dioctyl sodium sulfosuccinate, lactylated fatty acid esters of glycerol and propylene glycol, lactylic esters of fatty acids, sodium alkyl sulfates, polysorbate 20, polysorbate 60, polysorbate 65, polysorbate 80, lecithin, acetylated fatty acid esters of glycerol and propylene glycol, and acetylated esters of fatty acids, and combinations thereof.

Other water-soluble polymers

A water-soluble film can include water-soluble polymers in addition to the PVOH resin blends described herein. The additional water-soluble polymers can include, but are not limited to, additional PVOH homopolymers, PVOH copolymers, polyacrylates, water-soluble acrylate copolymers, polyvinyl pyrrolidone, polyethyleneimine, pullulan, water-soluble natural polymers including, but not limited to, guar gum, gum Acacia, xanthan gum, carrageenan, and starch, water-soluble polymer modified starches, copolymers of the forgoing and combinations of any of the foregoing. Yet other water-soluble polymers can include polyalkylene oxides, polyacrylamides, polyacrylic acids and salts thereof, celluloses, cellulose ethers, cellulose esters, cellulose amides, polyvinyl acetates, polycarboxylic acids and salts thereof, polyaminoacids, polyamides, gelatines, methylcelluloses, carboxymethylcelluloses and salts thereof, dextrins, ethylcelluloses, hydroxyethyl celluloses, hydroxypropyl methylcelluloses, maltodextrins, polymethacrylates, and combinations of any of the foregoing. Such water-soluble polymers, whether PVOH or otherwise, are commercially available from a variety of sources.

Defoamer

A water-soluble film can also include a defoamer. Defoamers can aid in coalescing of foam bubbles. Suitable defoamers for use in water-soluble films according to the present disclosure include, but are not limited to, hydrophobic silicas, for example silicon dioxide, siloxane, silicone ethers, or fumed silica in fine particle sizes, and proprietary, non-mineral oil defoamers including Foam Blast® defoamers available from Emerald Performance Materials, including Foam Blast® 327, Foam Blast® UVD, Foam Blast® 163, Foam Blast® 269, Foam Blast® 338, Foam Blast® 290, Foam Blast® 332, Foam Blast® 349, Foam Blast® 550 and Foam Blast® 339. In embodiments, defoamers can be used in an amount of 0.5 PHR, or less, for example, 0.05 PHR, 0.04 PHR, 0.03 PHR, 0.02 PHR, or 0.01 PHR.

Antioxidants

A water-soluble film disclosed herein can further include an antioxidant, for example, as a chloride scavenger. For example, suitable antioxidants/chloride scavengers include sulfite, bisulfite, thiosulfate, thiosulfate, iodide, nitrite, carbamate, ascorbate, and combinations thereof. In embodiments, the antioxidant is selected from propyl gallate (PGA), citric acid (CA), sodium metabisulfite (SMBS), carbamate, ascorbate, and combinations thereof. The antioxidant can be included in the film in an amount in a range of about 0.25 to about 1.5 PHR, for example, about 0.25 PHR, about 0.30 PHR, about 0.35 PHR, about 0.40 PHR, about 0.45 PHR, about 0.5 PHR, about 0.75 PHR, about 1.0 PHR, about 1.25 PHR, or about 1.5 PHR.

Other Additives

A water-soluble film optionally can comprise fillers, extenders, antiblocking agents, detackifying agents or a mixture thereof. Suitable fillers, extenders, antiblocking agents, detackifying agents or a mixture thereof include, but are not limited to, starches, modified starches, crosslinked polyvinylpyrrolidone, crosslinked cellulose, microcrystalline cellulose, silica, metallic oxides, calcium carbonate, talc, and mica. Starches, modified starches, silica, and mixtures thereof are particularly contemplated. The amount of filler, extender, antiblocking agent, detackifying agent or mixture thereof in the water-soluble film optionally can be in a range of about 0.1% to about 25%, or about 1% to about 10%, or about 2% to about 8%, or about 3% to about 5% by weight of the water-soluble film. In the absence of starch, a suitable filler, extender, antiblocking agent, detackifying agent or mixture thereof optionally can be present in a range of about 0.1% to about 1%, or about 4%, or about 6%, or about 1% to about 4%, or about 1% to about 2.5%, by weight of the water-soluble film.

A film as described herein can comprise a printed area. The area of print can be achieved using standard techniques, such as flexographic printing or inkjet printing. The area of print can face an internal compartment of the unit dose article, or can face the outside environment, or both, preferably the area of print faces an internal compartment of the unit dose article. Preferred inks used for printing the articles of the invention include red, white, and black pigments, for example, red: Pigment Red 254, white: titanium dioxide and black: lampblack or carbon black (pigment black 6).

A water-soluble film can comprise an aversive agent, for example a bittering agent. Suitable bittering agents include, but are not limited to, naringin, sucrose octaacetate, quinine hydrochloride, denatonium benzoate, and mixtures thereof. Any suitable level of aversive agent may be used in the film. Suitable levels include, but are not limited to, about 1 ppm to about 5000 ppm, or about 100 ppm to about 2500 ppm, or about 250 ppm to about 2000 ppm.

A water-soluble film can comprise a printed area. The area of print can be achieved using standard techniques, e.g., flexographic printing or inkjet printing.

A water-soluble film optionally can have a residual moisture content of at least 4%, or in a range of about 4% to about 15%, or in a range of about 5% to about 10% by weight of the water-soluble film as measured by Karl Fischer titration.

## Methods of Making Films

A water-soluble film of the disclosure can be made by any suitable method. Processes for making water-soluble films include solvent casting, blow-molding, extrusion, and blown extrusion, as generally known in the art. Processes for solvent casting are well-known in the art. For example, in the film-forming process, the resins and secondary additives are dissolved in a solvent, typically water, metered onto a surface, allowed to substantially dry (or force-dried) to form a cast film, and then the resulting cast film is removed from the casting surface. The process can be performed batchwise, and is more efficiently performed in a continuous process.

Solvent Casting

In the formation of continuous films, it is the conventional practice to meter a solution of the water-soluble resins and secondary components onto a moving casting surface, for example, a continuously moving metal drum or belt, causing the solvent to be substantially removed from the liquid, whereby a self-supporting cast film is formed, and then stripping the resulting cast film from the casting surface. The solution can optionally be metered or coated onto a carrier film, release liner, or removable backing, whereby after solvent removal, the resulting cast film or coating can be separated from the carrier film, release liner, or removable backing (for example, immediately upon drying or at a later point in time, e.g., prior to use) or remain attached to the carrier film, release liner, or removable backing. A film or coating prepared on a carrier film, release liner, or removable backing can be self-supporting or non-self-supporting.

In general, the amount of water in the metered solution of PVOH resin blend, additional water-soluble polymers, and/or secondary components for film casting is selected such that when the solution is heated to the casting temperature, the solution has the highest solids level below the viscosity inflection point. Methods of determining the amount of solids at the viscosity inflection point are known in the art. In general, the water content of the metered solution can comprise between 60 to 85% water, or 60 to 75% water to provide suitable solutions for casting at typical casting solutions. The viscosity of the casting solution can be, for example, at least about 20,000 cP at 185 °F (85 °C), at least 30,000 cP at 185 °F (85 °C), for example about 40,000 cP to about 50,000 cP at 185 °F (85 °C).

The solution can be cast at any suitable temperature such that the film has a temperature, for example, in a range of about 50 °C to about 105 °C, during drying. Without intending to be bound by theory, it is believed that as the casting solution and film temperature decreases below about 50 °C, the amount of time required to dry the film undesirably increases, and the length of the drying chamber needed to fully dry the cast solution undesirably increases. Further, without intending to be bound by theory, it is believed that as the solution and film temperature increases above about 105 °C, the solvent may rapidly boil out of the film, resulting in defects in the film surface such as holes or blisters in the finished films and/or facilitate undesirable reactions between adjacent PVOH backbone chain resulting in a film having reduced solubility.

In a continuous or semi-continuous casting process, the moving casting surface can have a line speed in a range of about 5 m/min to about 50 m/min. The line speed can affect the properties of the resulting film, for example, physical properties, thickness, residual moisture content and film quality. In general, as the line speed decreases, the thickness of the resulting film will increase and as the line speed increases, the thickness of the resulting film will decrease, assuming the delivery rate of solution remains constant. In general, as the line speed increases the residence time of the film in the dryer decreases, thereby requiring an increase in drying temperatures, which may result in drying defects or sticking at high enough temperatures. In contrast, as the line speed decreases, the residence time of the film in the dryer increases.

Any film according to the disclosure herein can be produced by solvent casting, e.g., using a solvent band casting system. The system can include a tank for mixing and/or storing a polymer solution, having optional secondary additives, for use with a band casting machine having at least a first and a second rotating drums about which a continuous band (e.g., metal band) is tensioned to travel with the rotation of the drums. A sheeting die can apply the polymer solution from the tank to the metal band where a drying chamber, enclosing at least a portion of the metal band downline of the sheeting die, is used to remove solvent from the polymer solution as it travels in a thin sheet on the metal band. In addition, a release coating can be used to provide one or more advantages to the film and/or the process. For example, the release coating can substantially reduce or eliminate bubbles in the produced polymer film, or the release coating can improve the ease of release of the produced film from the casting surface. A roll coater release coating applicator in communication with a supply of a release coating and a portion of the band can transfer fluid release coating to the casting surface prior to application of the polymer solution to the band. A suitable solvent band casting system and related materials are further described in U.S. Patent Application Publication No. 2006/0081176 A1, the disclosure of which is incorporated herein by reference in its entirety.

In general, the casting surface can be any suitable substrate for producing polymeric films to one of skill in the art. In embodiments, the substrate can be a casting roller or drum, a casting belt, or a combination thereof. As used herein, the substrate is used for producing a polymer film from a polymer resin or polymer resin solution. The substrate comprises a substrate surface and the substrate surface is coated with a release coating. The polymer resin solution can be cast onto a substrate while the substrate is moving, e.g., rotating. In embodiments, the substrate is a casting drum. In embodiments, the substrate is a casting belt. The substrate can comprise stainless steel, and optionally can have a stainless steel surface. The substrate can comprise stainless steel that is optionally plated, e.g., chrome plated, nickel plated, zinc plated or a combination thereof.

Release Coating

In general, the release coating can comprise one or more surfactants and an optional carrier, e.g., water. The release coating can comprise one or more surfactants, e.g., selected from a non-fluorinated anionic surfactant, a non-fluorinated zwitterionic surfactant, salts thereof, or any combination thereof. While non-fluorinated surfactants can be advantageous for environmental reasons, fluorosurfactants can be used herein. In embodiments, the anionic or zwitterionic surfactant(s) can be non-fluorinated and comprise a $C_6$-$C_{30}$ phosphate ester, a $C_6$-$C_{30}$ phosphate diester, a $C_6$-$C_{30}$ carboxylate, a $C_6$-$C_{30}$ dicarboxylate, a $C_6$-$C_{30}$ sulfate, a $C_6$-$C_{30}$ disulfate, or salts thereof. In embodiments, the release coating comprises a non-fluorinated zwitterionic surfactant or salts thereof. In embodiments, the release coating comprises a non-fluorinated anionic surfactant or salts thereof. In embodiments, the non-fluorinated anionic surfactant comprises a $C_6$-$C_{30}$ phosphate ester, or a $C_8$-$C_{16}$ phosphate ester, $C_6$-$C_{60}$ phosphate diester, $C_{16}$-$C_{32}$ phosphate diester, a $C_6$-$C_{30}$ carboxylate, a $C_6$-$C_{30}$ dicarboxylate, a $C_6$-$C_{30}$ sulfate, a $C_6$-$C_{30}$ disulfate, or salts thereof. In embodiments, the non-fluorinated anionic surfactant comprises a $C_6$-$C_{30}$ phosphate ester, or a $C_6$-$C_{18}$ phosphate ester, $C_6$-$C_{60}$ phosphate diester, $C_{18}$-$C_{32}$ phosphate diester, or salts thereof. In embodiments, the anionic surfactant can be selected from one or more of a tridecyl alcohol ethoxylate phosphate ester, POE-12; tridecyl alcohol ethoxylate phosphate ester, POE-3; laureth-11 carboxylic acid; crypto-anionic surfactant - laureth-6 carboxylic acid; or sodium lauryl ether sulfate, POE-4.

As used herein, the term "non-fluorinated" refers to a surfactant that has less than 0.01 wt% fluorine based on the total molecular weight of the compound, or less than 0.001 wt% fluorine based on the total molecular weight of the compound, or less than 0.0001 wt% fluorine based on the total molecular weight of the compound, or are compounds without fluorine atoms.

A range of from about 0.05% by weight to about 5.0% by weight of surfactant in the release coating is contemplated. The amount of surfactant required to provide adequate wetting can vary depending on the film being coated on the band. Other products may require higher concentrations to improve release properties. Hard surface spreading wetting will be more efficient with higher surfactant concentrations until the surfactant solution reaches the critical micelle concentration (CMC). This concentration represents a threshold beyond which additional surfactant will not produce any further efficiency in spreading wetting. However, increasing the concentration beyond the CMC may improve wetting by the polymer solution and improve the release properties of some film formulations.

The release coating can be applied to the surface of a substrate and optionally subsequently dried prior to casting a polymer resin or polymer resin solution onto the surface coated substrate. In embodiments, the release coating can have a pH of about 1 to about 5 when applied to the surface of the substrate, prior to drying the release coating on the surface of the substrate. In embodiments wherein the surfactant comprises a non-fluorinated anionic surfactant, a non-fluorinated zwitterionic surfactant, salts thereof, and a combination thereof, the release coating can have a pH of about 1 to about 8 or a pH of about 1 to about 5 when applied to the surface of the substrate, prior to drying the release coating on the surface of the substrate. For example, the release coating, when applied to the surface of the substrate, can have a pH of about 1, about 1.5, about 2, about 2.5, about 3, about 3.5, about 4, about 5, about 6, about 7, or about 8. In embodiments, the release coating can have a pH of about 1 to about 7, or about 1 to about 6, or about 1 to about 4, or about 1 to about 3, or about 2 to about 7, or about 2 to about 6, or about 2 to about 5, or about 2 to about 4 , or about 2 to about 3, or about 3 to about 7, or about 3 to about 5, or about 1.5 to about 3.5, or about 4 to about 7 when applied to the surface of the substrate, prior to drying the release coating on the surface of the substrate.

In general, the release coating can have a surfactant concentration in a range of about 0.001 wt% to about 100 wt%, based on the total weight of the release coating. In embodiments, the release coating can have a surfactant concentration in a range of about 0.001 wt% to about 20 wt% prior to drying the release coating on the surface of the substrate. For example, the release coating can have a surfactant concentration in a range of about 0.001 wt% to about 10 wt%, or about 0.01 wt% to about 5 wt%, or about 0.01 wt% to about 4 wt%, or about 0.01 wt% to about 3 wt%, or about 0.01 wt% to about 2 wt%, or about 0.05 wt% to about 2 wt%, or about 0.1 wt% to about 2 wt%, or about 0.5 wt% to about 2 wt%, prior to drying the release coating on the surface of the substrate. In embodiments, the release coating can have a surfactant concentration in a range of about 0.01 wt% to about 4.00 wt%, based on the total weight of the release coating prior to drying the release coating on the surface of the substrate. In embodiments, the release coating can have a surfactant concentration in a range of about 0.05 wt% to about 2.00 wt%, based on the total weight of the release coating prior to drying the release coating on the surface of the substrate. In embodiments, the release coating can have a surfactant concentration in a range of about 2.5 wt% to about 100 wt%, based on the total weight of the release coating, after drying the release coating on the surface of the substrate. For example, after drying the release coating on the surface of the substrate, the release coating can have a surfactant concentration in a range of about 3 wt% to about 100 wt%, or about 4 wt% to about 90 wt%, or about 4 wt% to about 80 wt%, or about 4 wt% to about 70 wt%, or about 4 wt% to about 50 wt%, or about 4 wt% to about 30 wt%, or about 4 wt% to about 20 wt%, or about 4.7 wt% to about 100 wt%, or about 5 wt% to about 90 wt%, based on the total weight of the release coating. In embodiments, the release coating can have a surfactant concentration in a range of about 4.7 wt% to about 100 wt%, based on the total weight of the release coating, after drying the release coating on the surface of the substrate.

In general, the release coating as described herein can have a hydrophilic-lipophilic balance in a range of about 1 to about 30. In embodiments, the release coating can have a hydrophilic-lipophilic balance in a range of about 1 to about 20, or about 1 to about 18, or about 1 to about 17, or about 1 to about 16, or about 1 to about 15, or about 2 to about 17, or about 3 to about 17, or about 4 to about 15, or about 5 to about 12, or about 8 to about 12. In embodiments, the release coating can have a hydrophilic-lipophilic balance in a range of about 1 to about 20. In embodiments, the release coating can have a hydrophilic-lipophilic balance in a range of about 3 to about 17.

In general, the release coating can have a thickness of about 0.1 nm to about 100 nm on the surface of the substrate. In embodiments, the release coating has a thickness of about 0.1 nm to about 80 nm, or about 0.1 nm to about 60 nm, or about 0.1 nm to about 40 nm, or about 0.1 nm to about 40 nm, or about 0.1 nm to about 20 nm, or about 0.1 nm to about 10 nm, or about 1 nm to about 10 nm, or about 1 nm to about 5 nm, on the surface of the substrate. In embodiments, the release coating has a thickness of about 0.1 nm to about 40 nm on the surface of the substrate. In embodiments, the release coating has a thickness of about 0.1 nm to about 10 nm on the surface of the substrate.

**Unit Dose Articles**

The disclosure also provides a water-soluble unit dose article. The water-soluble unit dose article comprises at least a first compartment and optionally a composition housed in the compartment. Suitable compositions are described in more detail below. The water-soluble unit dose article comprises a first water-soluble film and a second water-soluble film and optionally a third water-soluble film. The first water-soluble film, the second water-soluble film and the optional third water-soluble films can be selected from a film described herein. Optionally, the first water-soluble film, the second water-soluble film and the optional third water-soluble film can have the same composition or, in the alternative at least one of the films can have a different composition from another of the first water-soluble film, the second water-soluble film and the optional third water-soluble film.

The water-soluble unit dose article comprises a water-soluble film shaped such that the unit dose article comprises at least one internal compartment surrounded by the water-soluble film, or two or more water-soluble films are sealed to provide at least one internal compartment surrounded by the water-soluble films. In such a way, one or more films form one or more walls of the water-soluble unit dose article. An intermediate construct contemplated as an aspect of the disclosure herein can include elements of the article or portions of the article in an unsealed state, e.g., to allow for provision of a composition into the intermediate construction prior to final filling. The water-soluble unit dose article is constructed such that the composition does not leak out of the compartment during storage. However, upon contact of the water-soluble unit dose article with water, the water-soluble film dissolves and releases the contents of the internal compartment, e.g., into a wash liquor, bulk water, or other environment (e.g., onto soil in the case of an agricultural composition).

A compartment of the unit dose article should be understood as meaning a closed internal space within the unit dose article, which holds the composition when present. In practice, a compartment can be devoid of a composition, or devoid of a solid or liquid type composition disposed therein, e.g., containing only air to provide an article which has a degree of buoyancy for a period of time prior to dissolution.

The first water-soluble film has a first side and a second side. The second water-soluble film has a first side and a second side. The optional third water-soluble film has a first side and a second side.

In the case of a water-soluble unit dose article having a single (i.e., exactly one) compartment, the first side of the first water-soluble film can be sealed to the second side of the second water-soluble film to create the single compartment between the first water-soluble film and the second water-soluble film.

The water-soluble unit dose article can comprise two or more compartments. A water-soluble unit dose article comprising two or more compartments can have at least two compartments in a side-by-side configuration. A water-soluble unit dose article comprising two or more compartments can have at least two compartments in a superposed configuration (i.e., one compartment positioned above another compartment).

In the case of a water-soluble unit dose article having at least two compartments in a side-by-side configuration, the first side of the first water-soluble film can be sealed to the second side of the second water-soluble film to create the at least two compartments between the first water-soluble film and the second water-soluble film.

In the case of a water-soluble unit-dose article having at least two compartments in a superposed configuration, the first side of the first water-soluble film can be sealed to the second side of the second water-soluble film to create at least a first compartment between the first water-soluble film and the second water-soluble film, and the first side of the second water-soluble film can be sealed to the second side of the third water-soluble film to create at least a second compartment between the second water-soluble film and the third water-soluble film. The at least second compartment can be positioned above the at least first compartment.

The first side of the first water-soluble film is sealed to the second side of the second water-soluble film to create a first compartment between the first water-soluble film and the second water-soluble film. Optionally, the first side of the second water-soluble film is sealed to the second side of the third water-soluble film to create at least a second compartment between the second water-soluble film and the third water-soluble film, and optionally wherein the second compartment is positioned above the first compartment.

Optionally, the water-soluble unit dose article comprises at least a third compartment, optionally at least a third and a fourth compartment between the second water-soluble film and the third water-soluble film. The second compartment and the third compartment, optionally the second compartment, the third compartment and the fourth compartments can be positioned side-by-side to one another, further optionally the second compartment and the third compartment, e.g., the second compartment, the third compartment and the fourth compartment can be positioned above the first compartment. In one type of embodiment, the second and third compartments, or the second, third and fourth compartments can be smaller than the first compartment. The second and third compartments, or the second, third and fourth compartments can be the same size as one another or can be different sizes. Some of the compartments can be the same size and some can be different sizes.

As mentioned above, one class of embodiments of the water-soluble unit dose article includes at least two compartments. This type of embodiment is further described below. The water-soluble unit dose article comprises at least two compartments and optionally a composition housed in one or more of the compartments. Suitable compositions are described in more detail below. The water-soluble unit dose article comprises a first water-soluble film, a second water-soluble film and a third water-soluble film.

The final water-soluble unit dose article comprises water-soluble film shaped such that the unit dose article comprises at least two internal compartments surrounded by the water-soluble film. Intermediate constructions contemplated as aspects of the disclosure herein can include elements of the article or portions of the article in an unsealed state, e.g., to allow for provision of a composition into the intermediate construction prior to final filling of each of the compartments. Thus, for example, an intermediate construction can include a first sealed compartment and a second, partially open compartment ready for filling. The water-soluble unit dose article is constructed such that the two or more compositions do not leak out of the two or more compartments during storage. However, upon addition of the water-soluble unit dose article to water, the water-soluble film dissolves and releases the contents of the internal compartment, e.g., into a wash liquor, bulk water, or other environment.

A compartment of the final unit dose article should be understood as meaning a closed internal space within the unit dose article, which holds the composition when present. In practice, one or more compartments can be devoid of a composition disposed therein, e.g., to provide an article which has a degree of buoyancy for a period of time prior to dissolution.

Optionally, the water-soluble unit dose article comprises at least a third compartment, optionally at least a third and a fourth compartment between the second water-soluble film and the third water-soluble film. The second compartment and the third compartment, optionally the second compartment, the third compartment and the fourth compartments can be positioned side-by-side to one another, further optionally the second compartment and the third compartment, e.g., the second compartment, the third compartment and the fourth compartment can be positioned above the first compartment. In one type of embodiment, the second and third compartments, or the second, third and fourth compartments can be smaller than the first compartment. The second and third compartments, or the second, third and fourth compartments can be the same size as one another or can be different sizes. Some of the compartments can be the same size and some can be different sizes.

In any embodiment, the water-soluble unit dose article can contain (enclose) a composition, and a composition can be enclosed in one or more compartments of a multi-compartment unit dose article. The composition can be selected from a liquid, solid or combination thereof. As used herein, "liquid" includes free-flowing liquids, as well as pastes, gels, foams, and mousses. Non-limiting examples of liquids include light duty and heavy duty liquid detergent compositions, fabric enhancers, detergent gels commonly used for laundry, bleach, and laundry additives. Non-limiting examples of liquids include agricultural compositions, automotive compositions, aviation compositions, food and nutritive compositions, industrial compositions, livestock compositions, marine compositions, medical compositions, mercantile compositions, military and quasi-military compositions, office compositions, and recreational and park compositions, pet compositions, water-treatment compositions, including cleaning and detergent compositions applicable to any such use. Gases, e.g., suspended bubbles, or solids, e.g., particles, may be included within the liquids. A "solid" as used herein includes, but is not limited to, powders, agglomerates, and mixtures thereof. Non-limiting examples of solids include: granules, microcapsules, beads, noodles, and pearlised balls. Solid compositions may provide a technical benefit including, but not limited to, through-the-wash benefits, pre-treatment benefits, and/or aesthetic effects.

In any of the laundry-centric embodiments, the composition may be selected from the group of liquid light duty and liquid heavy duty liquid detergent compositions, powdered detergent compositions, fabric enhancers, detergent gels commonly used for laundry, and bleach (e.g., organic or inorganic bleach) and laundry additives, for example.

Each compartment of the water-soluble unit dose article can comprise the same or different compositions. The different compositions could all be in the same form, or they may be in different forms, e.g., solid, powder, gel, paste, liquid, etc.

Second water-soluble film

A water-soluble unit dose article can comprise a second water-soluble film. The second water-soluble film is soluble or dispersible in water. Preferably, the second water-soluble film can have a thickness of from 20 to 150 microns, or from 35 to 125 microns, or from 50 to 110 microns, or about 76 microns. The second water-soluble film has a first side and a second side.

A second film, when used in an article described herein, can contain a PVOH copolymer and/or PVOH homopolymer described above, or another PVOH polymer, or another water soluble resin.

One type of polymer contemplated for a second water soluble film is referred to herein as Polymer 3.

Polymer 3 comprises polyvinyl alcohol and is different from the PVOH copolymer described above, the PVOH homopolymer described above, and the PVOH polymer blend of the first film. By "different" is herein meant that the polymers differ in at least one feature that can be physical or chemical, for example the polymers can have the same monomer units but in a different ratio, the same monomer units but different degree of hydrolysis, different molecular weight, different viscosity, different anionic monomer unit, different polymer blend or polymer blend ratio, etc.

Polymer 3 can be selected from:

(i) a polymer consisting essentially of a vinyl alcohol monomer unit, a vinyl acetate monomer unit and a carboxylated monomer unit. Preferably, the carboxylate monomer unit is selected from an acrylate, a methacrylate, a maleate, or a mixture thereof, more preferably an acrylate;
(ii) a blend of polymers consisting essentially of a vinyl alcohol monomer unit and a vinyl acetate monomer unit; and
(iii) a polymer blend consisting essentially of a polymer consisting of a vinyl alcohol monomer unit and a vinyl acetate monomer unit, and a polymer consisting essentially of a vinyl alcohol monomer unit, a vinyl acetate monomer unit and a carboxylated monomer unit.

Polymer 3 can comprise a polymer consisting essentially of a vinyl alcohol monomer unit, a vinyl acetate monomer unit and a carboxylated monomer unit, wherein the carboxylated monomer unit is selected from an acrylate, a methacrylate, a maleate, or a mixture thereof, and wherein the polymer has an average degree of hydrolysis of from 80% to 99%, or from 88% to 99%, and a 4% solution viscosity at 20°C in a range of from 13 cP to 28 cP, or from 18 cP to 26 cP, and an average degree of anionic substitution of from 1% to 10%, or from 1% to 4%. Polymer 3 can consist essentially of a vinyl alcohol monomer unit, a vinyl acetate monomer unit and a carboxylated monomer unit, wherein the carboxylated monomer unit is acrylic acid and wherein the polymer has an average degree of hydrolysis of from 88% to 99% and a 4% solution viscosity at 20 °C of from 18 cP to 26 cP, and an average degree of anionic substitution of from 1% to 4%.

Polymer 3 can comprise, or consist of:

(i) from 1% to 70%, or from 30% to 70%, by weight of Polymer 3, of a polymer consisting essentially of a vinyl alcohol monomer unit and a vinyl acetate monomer unit, wherein the polymer has an average degree of hydrolysis of from 80% to 99.7%, or from 85% to 93%, or from 87% to 89%, and a 4% solution viscosity at 20°C of from 14.5 cP to 25 cP, or from 17 cP to 24 cP; and

(ii) from 30% to 99%, or from 30% to 70%, by weight of Polymer 3, of a polymer consisting essentially of a vinyl alcohol monomer unit, a vinyl acetate monomer unit and a carboxylated monomer unit, wherein the carboxylated monomer unit can be a monomer unit derived from a maleate monomer unit and salts, esters or anhydrides thereof, wherein the polymer has an average degree of hydrolysis of from 80% to 99.7%, or from 85% to 95%, or from 88% to 92%, and a 4% solution viscosity at 20°C of from 4 cP to 40 cP, or from 10 cP to 25 cP, or from 15 cP to 20 cP, and an average degree of anionic substitution of from 1% to 10%, or from 1% to 8%, or from 1% to 4%.

Polymer 3 can consist of:

(i) from 30% to 70%, by weight of Polymer 3, of a polymer consisting essentially of a vinyl alcohol monomer unit and a vinyl acetate monomer unit, wherein the polymer has an average degree of hydrolysis of from 87% to 89% and a 4% solution viscosity at 20°C of from 17 cP to 24 cP; and

(ii) from 30% to 70%, by weight of Polymer 3, of a polymer consisting essentially of a vinyl alcohol monomer unit, a vinyl acetate monomer unit and a carboxylated monomer unit, wherein the carboxylated monomer unit is monomethylmaleate, wherein the polymer has an average degree of hydrolysis of from 88% to 92% and a 4% solution viscosity at 20 °C of from 15 cP to 20 cP, and an average degree of anionic substitution of from 1% to 4%.

Polymer 3 can comprise or consist of:

(i) a first polymer consisting essentially of a vinyl alcohol monomer unit and a vinyl acetate monomer unit, wherein the first polymer has an average degree of hydrolysis of from 80% to 92%, or from 84% to 92%, and a 4% solution viscosity at 20 °C of from 8 cP to 40 cP, or from 10 cP to 20 cP, or from 12 cP to 14 cP; and

(ii) a second polymer consisting essentially of a vinyl alcohol monomer unit and a vinyl acetate monomer unit, wherein the second polymer has an average degree of hydrolysis of from 80% to 92%, or from 84% to 92%, and a 4% solution viscosity at 20 °C of from 1 cP to 20 cP, or from 3 cP to 15 cP, or from 5 cP to 10 cP; and

wherein the first and the second polymers are present in a weight ratio of from about 9: 1 to about 1:9, or from about 6:4 to about 4:6.

Polymer 3 can consist of:

(i) a first polymer consisting essentially of a vinyl alcohol monomer unit and a vinyl acetate monomer unit, wherein the first polymer has an average degree of hydrolysis of from 84% to 92% and a 4% solution viscosity at 20°C of from 12 cP to 14 cP; and

(ii) a second polymer consisting essentially of a vinyl alcohol monomer unit and a vinyl acetate monomer unit, wherein the second polymer has an average degree of hydrolysis of from 84% to 92% and a 4% solution viscosity at 20 °C of from 5 cP to 10 cP; and

wherein the first and the second polymers are present in a weight ratio of from about 6:4 to about 4:6.

Third water-soluble film

The water-soluble unit dose article can comprise a third water-soluble film. The third water-soluble film can be soluble or dispersible in water. The third water-soluble film can have a thickness of from 20 to 150 microns, or from 35 to 125 microns, or from 50 to 110 microns, or about 76 microns. The third water-soluble film has a first side and a second side.

The third film can be different from the first and second film and can comprise a PVOH polymer selected from the group of a PVOH copolymer described above, a PVOH homopolymer described above, Polymer 3 and any mixtures thereof.

The water-soluble unit dose article can be coated with a lubricating agent, for instance a lubricating agent selected from talc, zinc oxide, silicas, siloxanes, zeolites, silicic acid, alumina, sodium sulphate, potassium sulphate, calcium carbonate, magnesium carbonate, sodium citrate, sodium tripolyphosphate, potassium citrate, potassium tripolyphosphate, calcium stearate, zinc stearate, magnesium stearate, starch, modified starches, clay, kaolin, gypsum, cyclodextrins, and mixtures thereof.

The COMMISSION REGULATION (EU) No. 1297/2014 of 5 December 2014 amended, for the purposes of its adaptation to technical and scientific progress, Regulation (EC) No. 1272/2008 of the European Parliament and of the Council on classification, labelling and packaging of substances and mixtures to require additional provisions for liquid consumer laundry detergent in dosages for single use contained in a soluble packaging. Among those provisions were the requirements that the soluble packaging shall retain its liquid content for at least 30 seconds when the soluble packaging is placed in water at 20 °C. Accordingly, any unit dose article according to the disclosure herein and containing a detergent content, especially a liquid detergent content, preferably will retain its liquid content for at least 30 seconds when the soluble packaging is placed in water at 20 °C.

**Methods of Making Articles**

Methods of making a water-soluble unit dose article, such as a pouch or a packet will now be described in more detail. In one aspect, a method can include optionally deforming a first water-soluble film as described herein (e.g., thermoforming the film in a mould) to create an open cavity, filling the open cavity with a composition (e.g., a detergent composition), closing the open filled cavity with a second water-soluble film as described herein, and solvent sealing the second water-soluble film to the first water-soluble film to create a water-soluble unit dose article.

The unit dose articles, such as pouches and packets, may be made using any suitable equipment. For example, single compartment pouches may be made using vertical form filling, horizontal form filling, or rotary drum filling techniques commonly known in the art. Such processes may be either continuous or intermittent. Thus, the mould can be in any desired orientation with respect to the film; however, in one convenient type of embodiment the mould is below the film, to readily facilitate gravity filling of contents into a deformed film. The film may be dampened, and/or heated to increase the malleability thereof. The water-soluble films may be pre-heated ahead of deformation via a hot plate, an infra-red lamp, or a combination thereof, and use of an infra-red lamp is particularly contemplated. The method can also involve the use of a vacuum, e.g., to draw the film into a suitable mould. The vacuum, e.g., for drawing a film into a mould, can be applied for any suitable time, e.g., about 0.2 to about 5 seconds, or about 0.3 to about 3, or about 0.5 to about 1.5 seconds, e.g., once the film is on the mould surface. This vacuum can be such that it provides an underpressure in a range of 10 mbar to 1000 mbar, or in a range of 100 mbar to 600 mbar, for example.

A process of making a water-soluble unit dose article can include:

(i) thermoforming and/or vacuum forming a water-soluble film to create a cavity;

(ii) filling the cavity with a composition, e.g., a detergent composition or part thereof; and

(iii) closing the cavity with another film and/or a pre-formed compartment optionally comprising a composition, e.g., a detergent composition or part thereof, to create a single compartment or a multi-compartment water-soluble unit dose article.

The process can include the steps of:

(i) thermoforming and/or vacuum forming a film, which can be a first, second, or third film, to create a cavity;

(ii) filling the cavity with a composition, e.g., a detergent composition or part thereof; and

(iii) closing the cavity with another film, which can be the first, second, or third film, and/or a pre-formed compartment comprising a detergent composition or part thereof to create a single compartment or a multi-compartment water-soluble unit dose detergent article.

Sealing

The first water-soluble film and the second water-soluble film can be sealed via any suitable method, e.g., solvent sealing, heat sealing or a mixture thereof, for example via solvent sealing. The solvent sealing solution optionally comprises an aqueous solvent, a non-aqueous solvent, or a mixture thereof. The solvent sealing solution can comprise water or consist of water. The solvent sealing solution optionally comprises at least 95%, or at least 98%, or at least 99%, or 100% by weight of the solvent sealing solution of water. The solvent sealing solution can be applied by any suitable method, including contact and/or non-contact methods. For example, the solvent solution can be applied in a contact transfer process, e.g., using a contact member comprising a non-absorbent or substantially impermeable material, e.g., using an anilox roller, rubber (e.g., EPDM) roller, or any combination thereof, optionally in combination with a doctor blade. The sealing solution can be applied using a drawdown bar, Mayer bar, or similar apparatus. The sealing solution can be applied using a contact member comprising an absorbent material, for example natural felt, synthetic felt, porous plastic, foam, sponge, microfiber, cotton, polyester, extruded polyester fibers, nonwoven webs and the like, e.g., in pad or roller form. As another option, the sealing solution can be applied via a dosing nozzle or a spraying nozzle. Combinations of any of the foregoing methods and apparatus are contemplated. A contact transfer method using an absorbent material is contemplated, optionally in a continuous process, e.g., using a felt roll applicator. The solvent sealing solution can be applied to the second side of the second water-soluble film, the second side of the second water soluble film facing the first side of the first water-soluble film.

The second water-soluble film and the third water-soluble film can be sealed via any suitable method, e.g., solvent sealing, heat sealing or a mixture thereof, for example via solvent sealing. The solvent sealing solution optionally comprises an aqueous solvent, a non-aqueous solvent, or a mixture thereof. The solvent sealing solution can comprise water. The solvent sealing solution optionally comprises at least 95%, or even at least 98%, or even at least 99%, or even 100% by weight of the solvent sealing solution of water. The solvent sealing solution can be applied by any suitable method, including contact and/or non-contact methods. For example, the solvent solution can be applied in a contact transfer process, e.g., using a contact member comprising a non-absorbent or substantially impermeable material, e.g., using an anilox roller, rubber (e.g., EPDM) roller, or any combination thereof, optionally in combination with a doctor blade. The sealing solution can be applied using a drawdown bar, Mayer bar, or similar apparatus. The sealing solution can be applied using a contact member comprising an absorbent material, for example natural felt, synthetic felt, porous plastic, foam, sponge, microfiber, cotton, polyester, extruded polyester fibers, nonwoven webs and the like, e.g., in pad or roller form. As another option, the sealing solution can be applied via a dosing nozzle or a spraying nozzle. Combinations of any of the foregoing methods and apparatus are contemplated. A contact transfer method using an absorbent material is contemplated, optionally in a continuous process, e.g., using a felt roll applicator. The solvent sealing solution can be applied to the first side of the second water-soluble film, the first side of the second water soluble film facing the second side of the third water-soluble film.

The process for making the water-soluble unit dose articles can include automated manufacturing process equipment and steps, e.g., a conveyer belt, a series of conveyer belts, a drum, a series of drums or a combination thereof. The process for making the water-soluble unit dose articles can include or consist of manual manufacturing steps, in which the one or more sequences or steps described herein are conducted manually. Optionally, the process can include both manual and automated steps. A fully automated process is also contemplated.

The process of making the water-soluble unit dose articles, or portions of the process, can be performed as a continuous process. Alternatively, the process of making the water-soluble unit dose articles, or portions of the process, can be an intermittent or batch process. A process of making the water-soluble unit dose articles in a continuous or substantially continuous process is contemplated.

The moulds, in which the articles may be made, can have any shape, length, width and depth, depending on the required dimensions of the pouches. The moulds may also vary in size and shape from one to another, if desirable. For example, the volume of the final unit dose articles can be about 5 mL to about 300 mL, or about 10 mL to 150 mL, or about 20 mL to about 100 mL, and that the mould sizes are adjusted accordingly.

**Compositions**

Household care compositions

In embodiments, the water-soluble unit dose article can comprise a household care composition.

The household care composition can be selected from the group of light duty liquid detergent compositions, heavy duty liquid detergent compositions, hard surface cleaning compositions, laundry detergent gels, bleaching compositions, laundry additives, fabric enhancer compositions, and mixtures thereof, e.g., a liquid laundry detergent composition.

In another aspect, the composition can be selected from the group of laundry and automatic dishwashing compositions, including liquid laundry detergent compositions.

In another aspect, the household care composition can be selected from non-laundry and non-automatic dishwashing compositions, e.g., selected from the group of light duty liquid detergent compositions, heavy duty liquid detergent compositions, hard surface cleaning compositions, bleaching compositions, and other compositions which are non-laundry and non-automatic dishwashing compositions, or mixtures of any of the foregoing.

The term 'liquid laundry detergent composition' refers to any laundry detergent composition comprising a liquid capable of wetting and treating a fabric, and includes, but is not limited to, liquids, gels, pastes, dispersions, and the like. The liquid composition can include solids or gases in suitably subdivided form, but the liquid composition excludes forms which are non-fluid overall, such as tablets or granules.

The liquid detergent composition can be used in a fabric hand wash operation or may be used in an automatic machine fabric wash operation.

Preferably, the liquid laundry detergent composition comprises from 5% to 60%, or from 15% to 55%, by weight of the laundry detergent composition of a non-soap anionic surfactant. Preferably, the detergent composition comprises between 20% and 55%, more preferably between 25% and 50% of a non-soap anionic surfactant.

Preferably, the non-soap anionic surfactant comprises linear alkylbenzene sulphonate. Preferably, the linear alkylbenzene sulphonate comprises $C_{10}$-$C_{16}$ alkyl benzene sulfonate, $C_{11}$-$C_{14}$ alkyl benzene sulphonate or a mixture thereof. Preferably, the alkylbenzene sulphonate is an amine neutralized alkylbenzene sulphonate, an alkali metal neutralized alkylbenzene sulphonate or a mixture thereof. The amine is preferably selected from monoethanolamine, triethanolamine or mixtures thereof. The alkali metal is preferably selected from sodium, potassium, magnesium, or a mixture thereof. Preferably, the liquid laundry detergent composition comprises between 1% and 40%, preferably between 3% and 40%, more preferably between 6% and 35% by weight of the liquid laundry detergent composition of the linear alkylbenzene sulphonate.

Preferably, the non-soap anionic surfactant comprises an alkyl sulphate anionic surfactant wherein the alkyl sulphate anionic surfactant is selected from alkyl sulphate, an alkoxylated alkyl sulphate or a mixture thereof. The alkyl sulphate anionic surfactant may be a primary or a secondary alkyl sulphate anionic surfactant, or a mixture thereof, preferably a primary alkyl sulphate anionic surfactant. Preferably, the alkoxylated alkyl sulphate comprises ethoxylated alkyl sulphate, propoxylated alkyl sulphate, a mixed ethoxylated/propoxylated alkyl sulphate, or a mixture thereof, more preferably an ethoxylated alkyl sulphate. Preferably, the ethoxylated alkyl sulphate has an average degree of ethoxylation of between 0.1 to 5, preferably between 0.5 and 3. Preferably, the ethoxylated alkyl sulphate has an average alkyl chain length of between 8 and 18, more preferably between 10 and 16, most preferably between 12 and 15. Preferably, the alkyl chain of the alkyl sulphate anionic surfactant is linear, branched or a mixture thereof. Preferably, the branched alkyl sulphate anionic surfactant is a branched primary alkyl sulphate, a branched secondary alkyl sulphate, or a mixture thereof, preferably a branched primary alkyl sulphate, wherein the branching preferably is in the 2-position, or alternatively might be present further down the alkyl chain, or could be multi-branched with branches spread over the alkyl chain. The weight average degree of branching of alkyl sulphate anionic surfactant may be from 0% to 100% preferably from 0% to 95%, more preferably from 0% to 60%, most preferably from 0% to 20%. Alternatively, the weight average degree of branching of alkyl sulphate anionic surfactant may be from 70% to 100%, preferably from 80% to 90%. Preferably, the alkyl chain is selected from naturally derived material, synthetically derived material, or mixtures thereof. Preferably, the synthetically derived material comprises oxo-synthesized material, Ziegler-synthesized material, Guerbet-synthesized material, Fischer-Tropsch - synthesized material, iso-alkyl synthesized material, or mixtures thereof, preferably oxo-synthesized material. Preferably, the liquid laundry detergent composition comprises between 1% and 35%, preferably between 3% and 30%, more preferably between 6% and 20% by weight of the liquid laundry detergent composition of the alkyl sulphate anionic surfactant.

Preferably, the non-soap anionic surfactant comprises linear alkyl benzene sulphonate and an alkoxylated alkyl sulphate, more preferably, wherein the weight ratio of linear alkylbenzene sulphonate to alkoxylated alkyl sulphate is from 1:2 to 9:1, preferably from 1:1 to 7:1, more preferably from 1:1 to 5:1, most preferably from 1:1 to 4:1.

The liquid laundry detergent composition can comprise from 2.5% to 30%, or from 4% to 25%, or from 8% to 20%, by weight of the liquid laundry detergent composition of a non-ionic surfactant, e.g., an alkoxylated alcohol nonionic surfactant. The non-ionic surfactant is described in more detail below.

Preferably, the weight ratio of non-soap anionic surfactant to non-ionic surfactant is from 1:1 to 13:1, preferably from 1.25:1 to 10:1, more preferably from 1.5:1 to 7.5:1.

Preferably, the non-ionic surfactant comprises an alkoxylated alcohol, wherein the alkoxylated alcohol is derived from a synthetic alcohol, a natural alcohol, or a mixture thereof. The alkoxylated alcohol can be a primary alkoxylated alcohol, a secondary alkoxylated alcohol, or a mixture thereof, preferably a primary alkoxylated alcohol. Preferably, the alkoxylated alcohol comprises ethoxylated alcohol, propoxylated alcohol, a mixed ethoxylated/propoxylated alcohol, or a mixture thereof, more preferably an ethoxylated alcohol. Alternatively, the alkoxylated alcohol might also include higher alkoxy groups such as butoxy groups. When mixed alkoxy groups, the alkoxy groups can be randomly ordered or present in blocks, preferably are present in blocks. For example, mixed ethoxy (EO)/propoxy (PO) groups might be ordered in EO/PO blocks, PO/EO blocks, EO/PO/EO blocks or PO/EO/PO blocks. Preferably, the ethoxylated alcohol has an average degree of ethoxylation of between 0.1 to 20, preferably between 5 and 15, most preferably between 6 and 10. If propoxylation is present, preferably the average degree of propoxylation is between 0.1 to 25, more preferably between 2 and 20, most preferably between 5 and 10. Preferably, the alkoxylated preferably ethoxylated alcohol has an average alkyl chain length of between 8 and 18, more preferably between 10 and 16, most preferably between 12 and 16 or between 12 and 15. Preferably, the alkyl chain of the alkoxylated alcohol is linear, branched or a mixture thereof, wherein the branched alkyloxylated alcohol is a branched primary alkoxylated alcohol, a branched secondary alkoxylated alcohol, or a mixture thereof, preferably a branched primary alkoxylated alcohol. Preferably, the weight average degree of branching of the alkoxylated alcohol is from 0% to 100% preferably from 0% to 95%, more preferably 0% to 60%, most preferably from 0% to 40% or from 0% to 20%. The branching can be on the 2-alkyl position, or alternatively further down the alkyl chain, or can be multi-branched with individual branches spread over the alkyl chain. Preferably, the synthetically derived material comprises oxo-synthesized material, Ziegler-synthesized material, Guerbet-synthesized material, Fischer-Tropsch - synthesized material, iso-alkyl branched materials, or mixtures thereof, preferably oxo-synthesised material. The liquid laundry detergent composition can comprise between 0.5% and 20%, preferably between 1% and 15%, more preferably between 3% and 12% by weight of the liquid laundry detergent composition of the non-ionic surfactant, preferably wherein the nonionic surfactant consists of the alkoxylated alcohol. Without wishing to be bound by theory, non-ionic surfactants, especially alkoxylated alcohol non-ionic surfactants provide the benefit of excellent body soil cleaning and soil suspension.

The weight ratio of non-soap anionic surfactant to nonionic surfactant can be from 1:1 to 20:1, from 1.5:1 to 17.5:1, from 2:1 to 15:1, or from 2.5:1 to 13:1.

Preferably, the liquid laundry detergent composition comprises a fatty acid, preferably a neutralized fatty acid soap, preferably a fatty acid salt, more preferably an amine neutralized fatty acid salt, wherein preferably the amine is an alkanolamine more preferably selected from monoethanolamine, diethanolamine, triethanolamine or a mixture thereof, more preferably monoethanolamine. The liquid detergent composition may comprise between 1.5% and 20%, between 2% and 15%, between 3% and 12%, or between 4% and 10% by weight of the liquid detergent composition of fatty acid.

Preferably, the liquid laundry detergent composition comprises between 1% and 20%, preferably between 5% and 15% by weight of the liquid laundry detergent composition of water.

Preferably, the liquid laundry detergent composition comprises between 10% and 40%, preferably between 15% and 30% by weight of the liquid laundry detergent composition of a non-aqueous solvent, preferably wherein the non-aqueous solvent is selected from 1,2-propanediol, dipropylene glycol, tripropyleneglycol, glycerol, sorbitol, polyethylene glycol or a mixture thereof.

Preferably, the liquid laundry detergent composition comprises an adjunct ingredient selected from the group comprising builders, perfumes, enzymes, citrate, bleach, bleach catalyst, dye, hueing dye, brightener, cleaning polymers including alkoxylated polyamines and polyethyleneimines, soil release polymer, fabric care polymers including cationic hydroxyethyl celluloses and cationic polyglucans, surfactant, solvent, dye transfer inhibitors, chelant, encapsulated perfume, polycarboxylates, structurant, pH trimming agents, anti-oxidants including Ralox 35, and mixtures thereof.

Preferably, the laundry detergent composition comprises an enzyme selected from the group of hemicellulases, peroxidases, proteases, cellulases, xylanases, lipases, phospholipases, esterases, cutinases, pectinases, keratanases, reductases, oxidases, phenoloxidases, lipoxygenases, ligninases, pullulanases, tannases, pentosanases, malanases, β-glucanases, arabinosidases, hyaluronidase, chondroitinase, laccase, xyloglucanases, mannanases and amylases, nuclease, and mixtures thereof, preferably an enzyme selected from the group of proteases, amylase, cellulase, lipases, xyloglucanases, mannanases, and mixtures thereof. Preferably the enzyme is a lipase.

The term lipase as used herein, includes enzymes which catalyze the hydrolysis of fats (lipids). Lipases are a sub class of esterases. Lipases suitable in the present invention include phospholipases, acyltransferases or perhydrolases e.g., acyltransferases with homology to *Candida antarctica* lipase A, acyltransferase from *Mycobacterium smegmatis,* perhydrolases from the CE 7 family, and variants of the *M. smegmatis* perhydrolase in particular the S54V variant used in the commercial product Gentle Power Bleach from Huntsman Textile Effects Pte Ltd. Suitable lipases and cutinases include those of bacterial or fungal origin. Chemically modified or protein engineered mutant enzymes are included. Examples include lipase from *Thermomyces,* e.g., from *T. lanuginosus* (previously named *Humicola lanuginosa),* cutinase from *Humicola,* e.g., *H. insolens,* lipase from strains of *Pseudomonas* (some of these now renamed to *Burkholderia),* e.g., *P. alcaligenes* or *P. pseudoalcaligenes*, *P. cepacia, P. sp.* strain SD705, *P. wisconsinensis,* GDSL-type *Streptomyces* lipases, cutinase from *Magnaporthe grisea,* cutinase from *Pseudomonas mendocina,* lipase from *Thermobifida fusca*, *Geobacillus stearothermophilus* lipase, lipase from *Bacillus subtilis,* and lipase from *Streptomyces griseus* and *S. pristinaespiralis.* Typically, the lipase enzyme is present in the composition in an amount from 0.001% to 0.03%, preferably from 0.0025% to 0.025% and more preferably from 0.005% to 0.02% by weight of the composition of enzyme active protein. Without wishing to be bound by theory, enzymes are supplied as a preparation comprising the enzyme and other ingredients. Enzymes *per se* are proteins that catalyse reactions. By enzyme active protein we herein mean enzyme that can actively catalyse the relevant reaction.

Preferably, the liquid laundry detergent composition has a pH in a range of 6 to 10, more preferably in a range of 6.5 to 8.9, most preferably in a range of 7 to 8, wherein the pH of the laundry detergent composition is measured as a 10% product concentration in deionized water at 20°C.

The liquid laundry detergent composition may be Newtonian or non-Newtonian. Preferably, the liquid laundry detergent composition is non-Newtonian. Without wishing to be bound by theory, a non-Newtonian liquid has properties that differ from those of a Newtonian liquid, more specifically, the viscosity of non-Newtonian liquids is dependent on shear rate, while a Newtonian liquid has a constant viscosity independent of the applied shear rate. The decreased viscosity upon shear application for non-Newtonian liquids is thought to further facilitate liquid detergent dissolution. The liquid laundry detergent composition described herein can have any suitable viscosity depending on factors such as formulated ingredients and purpose of the composition.

Automatic dishwashing detergent composition:

The treatment composition may be an automatic dish washing detergent composition comprising an ingredient selected from surfactant, builder, sulfonated / carboxylated polymer, silicone suds suppressor, silicate, metal and/or glass care agent, enzyme, bleach, bleach activator, bleach catalyst, source of alkalinity, perfume, dye, solvent, filler, and mixtures thereof.

A preferred surfactant for use in automatic dishwashing detergents is low foaming by itself or in combination with other components (e.g., suds suppressers). Preferred for use herein are low and high cloud point nonionic surfactants and mixtures thereof including nonionic alkoxylated surfactants (especially ethoxylates derived from $C_6$-$C_{18}$ primary alcohols), ethoxylated-propoxylated alcohols (e.g., Olin Corporation's POLY-TERGENT® SLF18), epoxy-capped poly(oxyalkylated) alcohols (e.g., Olin Corporation's POLY-TERGENT® SLF 18B, ether-capped poly(oxyalkylated) alcohol surfactants, and block polyoxyethylene-polyoxypropylene polymeric compounds such as PLURONIC®, REVERSED PLURONIC®, and TETRONIC® series by the BASF-Wyandotte Corp., Wyandotte, Michigan; amphoteric surfactants such as the $C_{12}$-$C_{20}$ alkyl amine oxides (preferred amine oxides for use herein include lauryldimethyl amine oxide and hexadecyl dimethyl amine oxide), and alkyl amphocarboxylic surfactants such as MIRANOL™ C2M; and zwitterionic surfactants such as the betaines and sultaines; and mixtures thereof. Surfactants can be present at a level of from 0.2% to 30% by weight, more preferably from 0.5% to 10% by weight, most preferably from 1% to 5% by weight of a detergent composition.

Builders suitable for use in the detergent composition described herein include water-soluble builders, including citrates, carbonates, silicate, and polyphosphates, e.g., sodium tripolyphosphate and sodium tripolyphosphate hexahydrate, potassium tripolyphosphate and mixed sodium and potassium tripolyphosphate salts.

Enzymes suitable for use in the detergent composition described herein include bacterial and fungal cellulases including CAREZYME® and CELLUZYME® (Novo Nordisk A/S); peroxidases; lipases including AMANO-P® (Amano Pharmaceutical Co.), M1 LIPASE® and LIPOMAX® (Gist-Brocades) and LIPOLASE® and LIPOLASE ULTRA® (Novo); cutinases; proteases including ESPERASE®, ALCALASE®, DURAZYM® and SAVINASE® (Novo) and MAXATASE®, MAXACAL®, PROPERASE® and MAXAPEM® (Gist-Brocades); alpha and beta amylases including PURAFECT® OX AM (Genencor) and TERMAMYL®, BAN®, FUNGAMYL®, DURAMYL®, and NATALASE® (Novo); pectinases; and mixtures thereof. Enzymes can be added herein as prills, granulates, or cogranulates at levels typically in the range from 0.0001% to 2% pure enzyme by weight of the cleaning composition.

Suds suppressers suitable for use in the detergent composition described herein include nonionic surfactants having a low cloud point. "Cloud point" as used herein, is a well-known property of nonionic surfactants which is the result of the surfactant becoming less soluble with increasing temperature, the temperature at which the appearance of a second phase is observable is referred to as the "cloud point." As used herein, a "low cloud point" nonionic surfactant is defined as a nonionic surfactant system ingredient having a cloud point of less than 30 °C, preferably less than about 20 °C, and even more preferably less than about 10 °C, and most preferably less than about 7.5 °C. Low cloud point nonionic surfactants can include nonionic alkoxylated surfactants, especially ethoxylates derived from primary alcohol, and polyoxypropylene/polyoxyethylene/polyoxypropylene (PO/EO/PO) reverse block polymers. Also, such low cloud point nonionic surfactants can include, for example, ethoxylated-propoxylated alcohol (e.g., BASF POLY-TERGENT® SLF18) and epoxy-capped poly(oxyalkylated) alcohols (e.g., BASF POLY-TERGENT® SLF18B series of nonionics.

Other suitable components for use in the detergent composition described herein include cleaning polymers having anti-redeposition, soil release or other detergency properties. Anti-redeposition polymers for use herein include acrylic acid containing polymers such as SOKALAN® PA30, PA20, PA15, PA10 and SOKALAN® CP10 (BASF GmbH), ACUSOL® 45N, 480N, 460N (Rohm and Haas), acrylic acid/maleic acid copolymers such as SOKALAN® CP5, and acrylic/methacrylic copolymers. Other suitable polymers include amine-based polymers such as alkoxylated polyalkyleneimines (e.g., PEI600 EO20 and/or ethoxysulfated hexamethylene diamine dimethyl quats), which, optionally, may be quaternized. Soil release polymers for use herein include alkyl and hydroxyalkyl celluloses, polyoxyethylenes, polyoxypropylenes and copolymers thereof, and nonionic and anionic polymers based on terephthalate esters of ethylene glycol, propylene glycol and mixtures thereof.

Heavy metal sequestrants and crystal growth inhibitors are also suitable for use in the detergent, for example diethylenetriamine penta(methylene phosphonate), ethylenediamine tetra(methylene phosphonate) hexamethylenediamine tetra(methylene phosphonate), ethylene diphosphonate, hydroxy-ethylene-1,1-diphosphonate, nitrilotriacetate, ethylenediaminetetraacetate, and ethylenediamine-N,N'-disuccinate, in their salt and/or free acid forms.

Suitable for use in the detergent composition described herein is also a corrosion inhibitor, for example organic silver coating agents (especially paraffins such as WINOG® 70 sold by Wintershall, Salzbergen, Germany), nitrogen-containing corrosion inhibitor compounds (for example benzotriazole and benzimidazole and Mn(II) compounds, particularly Mn(II) salts of organic ligands.

Other suitable components for use in the detergent composition herein include enzyme stabilizers, for example calcium ion, boric acid, and propylene glycol.

Suitable rinse additives are known in the art. Commercial rinse aids for dishwashing typically are mixtures of low-foaming fatty alcohol polyethylene/polypropylene glycol ethers, solubilizers (for example cumene sulfonate), organic acids (for example citric acid) and solvents (for example ethanol). The function of such rinse aids is to influence the interfacial tension of the water in such a way that it is able to drain from the rinsed surfaces in the form of a thin coherent film, so that no water droplets, streaks, or films are left after the subsequent drying process.

Non-household care compositions

The composition for inclusion in the unit dose article can be a non-household care composition. For example, a non-household care composition can be selected from agricultural compositions, automotive compositions, aviation compositions, food and nutritive compositions, industrial compositions, livestock compositions, marine compositions, medical compositions, mercantile compositions, military and quasi-military compositions, office compositions, personal care compositions, and recreational and park compositions, pet compositions, water-treatment compositions, including cleaning and detergent compositions applicable to any such use.

In one type of embodiment, the composition can include an agrochemical, e.g., one or more insecticides, fungicides, herbicides, pesticides, miticides, repellants, attractants, defoliaments, plant growth regulators, fertilizers, bactericides, micronutrients, and trace elements. Suitable agrochemicals and secondary agents are described in U.S. Patent Nos. 6,204,223 and 4,681,228 and EP 0989803 A1. For example, suitable herbicides include paraquat salts (for example paraquat dichloride or paraquat bis(methylsulphate), diquat salts (for example diquat dibromide or diquat alginate), and glyphosate or a salt or ester thereof (such as glyphosate isopropylammonium, glyphosate sesquisodium or glyphosate trimesium, also known as sulfosate). Incompatible pairs of crop protection chemicals can be used in separate chambers, for example as described in U.S. Patent No. 5,558,228. Incompatible pairs of crop protection chemicals that can be used include, for example, bensulfuron methyl and molinate; 2,4-D and thifensulfuron methyl;2,4-D and methyl 2-[[[[N-4-methoxy-6-methyl-1,3,5-triazine-2-yl)-N-methylamino]carbonyl]amino]-sulfonyl]benzoate; 2,4-D and metsulfuron methyl; maneb or mancozeb and benomyl; glyphosate and metsulfuron methyl; tralomethrin and any organophosphate such as monocrotophos or dimethoate; bromoxynil and N-[[4,6-dimethoxypyrimidine-2-yl) -amino]carbonyl]-3-(ethylsulfonyl)-2-pyridine - sulfonamide; bromoxynil and methyl 2-[[[[(4-methyl-6-methoxy)-1,3,5-triazin-2-yl)amino]carbonyl]amino]sulfonyl]-benzoate; bromoxynil and methyl 2-[[[[N-(4-methoxy-6-methyl-1,3,5-triazin-2-yl)-N-methylamino]carbonyl]amino]-sulfonyl]benzoate. In another, related, type of embodiment, the composition can include one or more seeds, optionally together with soil, and further optionally together with one or more additional components selected from mulch, sand, peat moss, water jelly crystals, and fertilizers, e.g., including types of embodiments described in U.S. Patent No. 8,333,033.

In another type of embodiment, the composition is a water-treatment agent. Such agents include aggressive oxidizing chemicals, e.g., as described in U.S. Patent Application Publication No. 2014/0110301 and U.S. Patent No. 8,728,593. For example, sanitizing agents can include hypochlorite salts such as sodium hypochlorite, calcium hypochlorite, and lithium hypochlorite; chlorinated isocyanurates such as dichloroisocyanuric acid (also referred to as "dichlor" or dichloro-s-triazinetrione, 1 ,3-dichloro- 1 ,3,5-triazinane-2,4,6-trione) and trichloroisocyanuric acid (also referred to as "trichlor" or I,3,5-trichloro-I,3,5-triazinane-2,4,6-trione). Salts and hydrates of the sanitizing compounds are also contemplated. For example, dichloroisocyanuric acid may be provided as sodium dichloroisocyanurate, sodium dichloroisocyanurate acid dihydrate, among others. Bromine containing sanitizing agents may also be suitable for use in unit dose packaging applications, such as I,3-dibromo-5,5-dimethylhydantoin (DBDMH), 2,2- dibromo-3-nitrilopropionamide (DBNPA), dibromocyano acetic acid amide, 1-bromo- 3-chloro-5,5-dimethylhydantoin; and 2-bromo-2-nitro- 1,3 -propanediol, among others. The oxidizing agent can be one described in U.S. Patent No. 7,476,325, e.g., potassium hydrogen peroxymonosulfate. The composition can be a pH-adjusting chemical, e.g., as described in U.S. Patent Application Publication No. 2008/0185347, and can include, for example, an acidic component and an alkaline component such that the composition is effervescent when contacted with water, and adjusts the water pH. Suitable ingredients include sodium bicarbonate, sodium bisulfate, potassium hydroxide, sulfamic acid, organic carboxylic acids, sulfonic acids, and potassium dihydrogen phosphate. A buffer blend can include boric acid, sodium carbonate, glycolic acid, and oxone monopersulfate, for example.

A water-treatment agent can be or can include a flocculant, e.g., as described in U.S. Patent Application Publication No. 2014/0124454. The flocculant can include a polymer flocculant, e.g., polyacrylamide, a polyacrylamide copolymer such as an acrylamide copolymers of diallyldimethylammonium chloride (DADMAC), dimethylaminoethylacrylate (DMAEA), dimethylaminoethylmethacrylate (DMAEM), 3-methylamidepropyltrimethylammonium chloride (MAPTAC) or acrylic acid; a cationic polyacrylamide; an anionic polyacrylamide; a neutral polyacrylamide; a polyamine; polyvinylamine; polyethylene imine; polydimethyldiallylammonium chloride; poly oxyethylene; polyvinyl alcohol; polyvinyl pyrrolidone; polyacrylic acid; polyphosphoric acid; polystyrene sulfonic acid; or any combination thereof. A flocculant can be selected from chitosan acetate, chitosan lactate, chitosan adipate, chitosan glutamate, chitosan succinate, chitosan malate, chitosan citrate, chitosan fumarate, chitosan hydrochloride, and combinations thereof. The water-treating composition can include a phosphate removing substance, e.g., one or more selected from a zirconium compound, a rare earth lanthanide salt, an aluminum compound, an iron compound, or any combination thereof.

The composition can be a limescale removing composition, e.g., citric, or maleic acid or a sulphate salt thereof, or any mixture thereof, e.g., as described in U.S. Patent Application No. 2006/0172910.

In another type of embodiment, the composition is a personal care composition. The personal care composition can be, but is not limited to, a shampoo, a conditioner, a combination shampoo & conditioner, a body wash, a hand soap, a shaving cream, a deodorant, a skin lotion, a moisturizer, a bath product, a mouse, a styling gel, a hair dye or other hair color product, a hair bleach, a hair wave product, a hair straightener, a nail cream, a cuticle softener, an insect repellent, an anti-aging product, a cosmetic, an aftershave lotion, an aftershave tonic, a fragrance preparation, a tanning lotion, a sunscreen lotion, a facial cleanser, a facial scrub, a toothpaste, a tooth whitener, a tooth bleach, a bath salt, and any combination of the foregoing. The personal care composition can include a surfactant. The personal care composition can include more than one surfactant. The personal care composition can be free of surfactants.

Various other types of compositions are contemplated for use in the unit dose articles described herein, including particulates, for example down feathers, e.g., as described in US RE29059 E; super absorbent polymers, e.g., as described in U.S. Patent Application Publication Nos. 2004/0144682 and 2006/0173430; pigments and tinters, e.g., as described in U.S. Patent No. 3,580,390 and U.S. Patent Application Publication No. 2011/0054111; brazing flux, e.g., as described in U.S. Patent No. 8,163,104; ingestible and food items (e.g., coffee powder or dried soup) as described in U.S. Patent Application Publication No. 2007/0003719; and wound dressings, e.g., as described in U.S. Patent No. 4,466,431.

Active agents

In another aspect, the composition for use in the unit dose article can be characterized by an active agent therein, e.g., a personal care active agent, a beauty benefit active agent, a skin care active agent, a hair care active agent, a fabric care active agent, a dishwashing active agent, a hard surface active agent, an agricultural active agent, an ingestible active agent, a liquid treatment active agent, an industrial active agent, or a combination of any of the foregoing.

"Personal care active agent," as used herein, means an active agent that may be applied to mammalian keratinous tissue without undue undesirable effects.

"Keratinous tissue," as used herein, means keratin-containing layers disposed as the outermost protective covering of mammals and includes, but is not limited to, skin, hair, scalp, and nails.

"Beauty benefit," as used herein in reference to mammalian keratinous tissue includes, but is not limited to cleansing, sebum inhibition, reducing the oily and/or shiny appearance of skin and/or hair, reducing dryness, itchiness and/or flakiness, reducing skin pore size, exfoliation, desquamation, improving the appearance of the keratinous tissue, conditioning, smoothening, deodorizing skin and/or providing antiperspirant benefits, etc.

"Beauty benefit active agent," as used herein, refers to an active agent that can deliver one or more beauty benefits.

"Skin care active agent" as used herein, means an active agent that when applied to the skin provides a benefit or improvement to the skin. It is to be understood that skin care active agents are useful not only for application to skin, but also to hair, scalp, nails, and other mammalian keratinous tissue.

"Hair care active agent" as used herein, means an active agent that when applied to mammalian hair provides a benefit and/or improvement to the hair. Non-limiting examples of benefits and/or improvements to hair include softness, static control, hair repair, dandruff removal, dandruff resistance, hair coloring, shape retention, hair retention, and hair growth.

"Fabric care active agent" as used herein means an active agent that when applied to fabric provides a benefit and/or improvement to the fabric. Non-limiting examples of benefits and/or improvements to fabric include cleaning (for example by surfactants), stain removal, stain reduction, wrinkle removal, color restoration, static control, wrinkle resistance, permanent press, wear reduction, wear resistance, pill removal, pill resistance, soil removal, soil resistance (including soil release), shape retention, shrinkage reduction, softness, fragrance, anti-bacterial, anti-viral, odor resistance, and odor removal.

"Dishwashing active agent" as used herein means an active agent that when applied to dishware, glassware, pots, pans, utensils, and/or cooking sheets provides a benefit and/or improvement to the dishware, glassware, pots, pans and/or cooking sheets. Non-limiting example of benefits and/or improvements to the dishware, glassware, pots, pans, utensils, and/or cooking sheets include food and/or soil removal, cleaning (for example by surfactants) stain removal, stain reduction, grease removal, water spot removal and/or water spot prevention, shining, and polishing.

"Hard surface active agent" as used herein means an active agent when applied to floors, countertops, sinks, windows, mirrors, showers, baths, and/or toilets provides a benefit and/or improvement to the floors, countertops, sinks, windows, mirrors, showers, baths, and/or toilets. Non-limiting example of benefits and/or improvements to the floors, countertops, sinks, windows, mirrors, showers, baths, and/or toilets include food and/or soil removal, grease removal, water spot removal and/or water spot prevention, shining, and polishing.

"Agricultural active agent" as used herein means an active agent that when applied to crops and/or plants provides a benefit and/or improvement to the crops and/or plants. For example, insecticides, herbicides, fertilizers, drought resistant agents, are non-limiting examples of suitable agricultural active agents that may be present in the compositions of the present invention contained in a unit dose article.

"Ingestible active agent" as used herein means an active agent that is suitable for ingestion and/or consuming by an animal, for example a mammal, such as a human, by way of mouth, nose, eyes, ears, skin pores, rectum, vagina, or other orifice or wound (such as delivering an active agent by wound dressing) in the animal. Non-limiting examples of ingestible active agents include feminine hygiene active agents, baby care active agents, oral care active agents, medicinal active agents, vitamins, dietary active agents (for example delivered in a new food form), pet care active agents, and mixtures thereof.

"Liquid treatment active agent" as used herein means an active agent that when applied to a liquid such as water and/or alcohol, provides a benefit and/or improvement to the liquid. For example, chlorine and/or other swimming pool chemicals are non-limiting examples of suitable liquid treatment active agents. In another example, water clarifying and/or water disinfecting active agents, such as are used in commercial water filtering and/or water treatment technologies such as PUR® are non-limiting examples of suitable liquid treatment active agents that may be present in the compositions of the present invention contained in a unit dose article. Further, oil dispersants and/or oil scavenging agents are non-limiting examples of other suitable liquid treatment active agents.

"Industrial active agent" as used herein means an active agent that provides a benefit within an article of manufacture. For example, glue and/or adhesive to provide bonding between two object, insecticides incorporated into insulation, such as housing insulation, oxygen scavenging active agents incorporated into packaging for food and/or perishable goods, insect repellants incorporated into articles used by humans to repel insects, and moisture scavengers incorporated into desiccants are non-limiting examples of industrial active agents that may be present in the compositions of the present invention contained in a unit dose article.

## EXAMPLES

The following examples are provided for illustration and are not intended to limit the scope of the invention.

**Test Methods**

In the examples below, the following test methods were employed

Dissolution Chamber Residue Test

A water-soluble film characterized by or to be tested for undissolved residue according to the Dissolution Chamber (DC) Test is analyzed as follows using the following materials:

- Beaker (4000 mL);

- Stainless steel washers (3.5" (88.9 mm) OD, 1.875" ID (47.6 mm), 0.125" (3.18 mm) thick);

- Styrene-butadiene rubber gaskets (3.375" (85.7 mm) OD, 1.91" ID (48.5 mm), 0.125" thick (3.18 mm));

- Stainless steel screens (3.0" (76.2 mm) OD, $200 \times 200$ mesh, 0.0021" (0.053 mm) wire OD, 304SS stainless steel wire cloth);

- Thermometer (0°C to 100°C, accurate to +/-1°C);

- Cutting punch (1.5" (38.1 mm) diameter);

- Timer (accurate to the nearest second);

- Reverse osmosis (RO) water;

- Binder clips (size #5 or equivalent);

- Aluminum pans (2.0" (50.8 mm) OD); and

- Sonicator.

For each film to be tested, three test specimens are cut from a selected test film having a thickness of 76 $\mu$m using the cutting punch. If cut from a film web made by a continuous process, the specimens should be cut from areas of web evenly spaced along the transverse direction of the web (i.e., perpendicular to the machine direction). Each test specimen is then analyzed using the following procedure:

1. Weigh the film specimen and track the specimen through the test. Record the initial film weight ($F_o$).

2. Weigh a set of two sonicated, clean, and dry screens for each specimen and track them through the test. Record the initial screen weights (collectively $S_o$ for the two screens combined).

3. Assemble a specimen dissolution chamber by flatly sandwiching the film specimen between the center of the two screens, followed by the two rubber gaskets (one gasket on each side between the screen and washer), and then the two washers.

4. Secure the dissolution chamber assembly with four binder clips evenly spaced around the washers and the clips folded back away from the screens.

5. Fill the beaker with 1,500 mL of RO water at laboratory room temperature (e.g., about 72 °F +/- 3 °F, or about 22 °C +/- 2°C) and record the room temperature.

6. Set the timer to a prescribed immersion time of 5 minutes.

7. Place the dissolution chamber assembly into the beaker and immediately start the timer, inserting the dissolution chamber assembly at an approximate 45 degree entry angle into the water surface. This entry angle helps remove air bubbles from the chamber. The dissolution chamber assembly rests on the beaker bottom such that the test specimen film is positioned horizontally about 10 mm from the bottom. The four folded-back binder clips of the dissolution chamber assembly are suitable to maintain the about 10 mm film clearance from the beaker bottom, however, any other equivalent support means may be used.

8. At the prescribed elapsed prescribed immersion time of 5 minutes, slowly remove the dissolution chamber assembly from the beaker at an approximate 45 degree angle.

9. Hold the dissolution chamber assembly horizontally over the aluminum pan to catch any drips from the screens and carefully remove the binder clips, washers, and gaskets. Do not break open the sandwiched screens.

10. Place the sandwiched screens (i.e., screen/residual undissolved film/screen) over the aluminum pan and into an oven at 100°C for 30 minutes to dry.

11. Weigh the dried set of sandwiched screens including any residual undissolved film therein. Measure and add to this dried screen weight any dried film drippings captured in and recovered from (e.g., by scraping) the pan when the dissolution chamber assembly was first removed from the beaker and during drying. Record the final sandwiched screen weight (collectively $S_f$, including the dried film drippings).

12. Calculate % residue ("DC residue") left for the film specimen:

$$\%DC\ residue = 100 \times ((S_f - S_o)/F_o).$$

13. Clean the sandwiched screens by soaking them in a beaker of RO water for about 20 minutes. Then, take them apart and do a final rinse in the sonicator (turned on and filled with RO water) for at least 5 minutes or until no residue is visible on the screens.

Tensile Strength Test and Modulus Test

A water-soluble film characterized by or to be tested for tensile strength according to the Tensile Strength (TS) Test and modulus (or tensile stress) according to the Modulus (MOD) Test is analyzed as follows. The procedure includes the determination of tensile strength and the determination of modulus at 10% elongation according to ASTM D 882 ("Standard Test Method for Tensile Properties of Thin Plastic Sheeting") or equivalent. An INSTRON tensile testing apparatus (Model 5544 Tensile Tester or equivalent) is used for the collection of film data. A minimum of three test specimens, each cut with reliable cutting tools to ensure dimensional stability and reproducibility, are tested in the machine direction (MD) (where applicable) for each measurement. Tests are conducted in the standard laboratory atmosphere of $23\pm2.0°C$ and $35\pm5\%$ relative humidity. For tensile strength or modulus determination, 1"-wide (2.54 cm) samples of a single film sheet having a thickness of 76 $\mu$m are prepared. The sample is then transferred to the INSTRON tensile testing machine to proceed with testing while minimizing exposure in the 35% relative humidity environment. The tensile testing machine is prepared according to manufacturer instructions, equipped with a 500 N load cell, and calibrated. The correct grips and faces are fitted (INSTRON grips having model number 2702-032 faces, which are rubber coated and 25 mm wide, or equivalent). The samples are mounted into the tensile testing machine and analyzed to determine the 100% modulus (i.e., stress required to achieve 100% film elongation), typically reported in units MPa, and tensile strength (i.e., stress required to break film), typically reported in units MPa.

Gelling factor (G) method

The gelling factor method measures the strength of a gel formed between the enclosed detergent composition and the polyvinyl alcohol comprising the water-soluble film upon initial dissolution in the wash water. This method is designed to provide a lab characterization (using very low water amounts) of the infrequent or extreme in-home process where gelling can occur. It is used as a proxy to assess when the detergent is released into the washing water. If residues are created during the laundry process these residues can be redissolved but it might imply a further step and the purpose of this invention is to reduce the touches needed by the user during the laundry process.

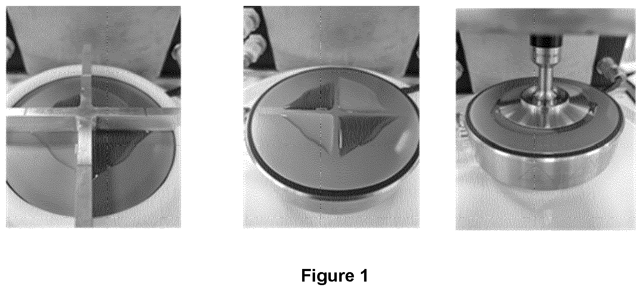

The gelling factor is measured using a plate-to-plate rotational rheometer (TA Discovery Hybrid Rheometer) using a 60 mm flat spindle. The temperature of the bottom plate is set to 5 °C. An aluminum made cross-based frame (width of each crossbar is 6 mm) is placed on the bottom plate in order to divide the bottom plate in four equal quadrants. 1 mL of the detergent composition at room temperature, e.g., 20 °C $\pm$ 2°C, is respectively added at two opposing quadrants, creating a substantial triangular shape along the respective crossbars of the frame, as shown in Figure 1. 1 mL of a 10 wt% solution of dissolved water-soluble film in demineralized water at room temperature is dosed in the remaining two opposing quadrants. The cross-based frame is hence removed such that the four liquids remain separate. The rotating spindle is hence lowered to measurement condition such that the liquid comes out slightly off the entire perimeter of the spindle. The consequent measurement procedure includes a 30 second temperature conditioning, a peak hold of 180 seconds at 40/s and a gradual oscillatory angular frequency logarithmic sweep (from 100 to 0.016 rad/s within about 38 minutes through a logarithmic sweep at a constant and controlled stress of 0.1 Pa, to ensure that the gel is always within the linear visco-elastic regime). The storage modulus (G') and loss modulus (G") are measured at 5 points per decade, which produces twenty data points in total. The average storage modulus (in Pa) and average loss modulus (in Pa) are calculated of the respective values at 0.040, 0.025 and 0.015 rad/s, e.g., the three last data points measured. The gelling factor is consequently calculated by dividing the average storage modulus by the average loss modulus value. It is a dimensionless value. Three measurements are taken and the average is taken as the gelling factor.

Dissolution and Disintegration Test (MSTM-205)

A film can be characterized by or tested for Dissolution Time and Disintegration Time according to the MonoSol Test Method 205 (MSTM-205), a method known in the art. See, for example, U.S. Patent No. 7,022,656.

Apparatus and Materials:

- 600 mL Beaker
- Magnetic Stirrer (Labline Model No. 1250 or equivalent)
- Magnetic Stirring Rod (5 cm)
- Thermometer (0 to 100°C $\pm$ 1°C)
- Template, Stainless Steel (3.8 cm $\times$ 3.2 cm)
- Timer (0-300 seconds, accurate to the nearest second)
- Polaroid 35 mm slide Mount (or equivalent)
- MonoSol 35 mm Slide Mount Holder (or equivalent)
- Distilled water

For each film to be tested, three test specimens are cut from a film sample that is a 3.8 cm × 3.2 cm specimen. If cut from a film web, specimens should be cut from areas of web evenly spaced along the traverse direction of the web. Each test specimen is then analyzed using the following procedure.

Lock each specimen in a separate 35 mm slide mount.

Fill beaker with 500 mL of distilled water. Measure water temperature with thermometer and, if necessary, heat or cool water to maintain temperature at 20°C (about 68°F), or if a different temperature is used then specify the temperature with the results.

Mark height of column of water. Place magnetic stirrer on base of holder. Place beaker on magnetic stirrer, add magnetic stirring rod to beaker, turn on stirrer, and adjust stir speed until a vortex develops which is approximately one-fifth the height of the water column. Mark depth of vortex.

Secure the 35 mm slide mount in the alligator clamp of the 35 mm slide mount holder such that the long end of the slide mount is parallel to the water surface. The depth adjuster of the holder should be set so that when dropped, the end of the clamp will be 0.6 cm below the surface of the water. One of the short sides of the slide mount should be next to the side of the beaker with the other positioned directly over the center of the stirring rod such that the film surface is perpendicular to the flow of the water.

In one motion, drop the secured slide and clamp into the water and start the timer. Disintegration occurs when the film breaks apart. When all visible film is released from the slide mount, raise the slide out of the water while continuing to monitor the solution for undissolved film fragments. Dissolution occurs when all film fragments are no longer visible, and the solution becomes clear.

The results should include the following: complete sample identification; individual and average disintegration and dissolution times; and water temperature at which the samples were tested.

Film disintegration times (I) and film dissolution times (S) can be corrected to a standard or reference film thickness using the exponential algorithms shown below in Equation 1 and Equation 2, respectively.

$$I_{corrected} = I_{measured} \times (reference\ thickness/measured\ thickness)^{1.93} \qquad [1]$$

$$S_{corrected} = S_{measured} \times (reference\ thickness/measured\ thickness)^{1.83} \qquad [2]$$

Pouch Strength method

This test method describes the practice for determining the pouch strength of a unit dose article using the Mark-10 testing instrument ESM750SLCE (j.j. bos b.v., Marconistraat 1, NL-2809 PH Gouda, The Nederlands) with a load cell of maximum 100 kN (kilo Newton). Under the effect of the external compression force, the pouch deforms building stress on both the film and the seal area. The internal pressure in the pouch depends on the outside applied force on the overall pouch surface area. Pouch strength (in Newtons) is defined as the maximum compression force required by two parallel plates to increase the internal pressure of the pouch up to the point of burst. Pouches bursting at the seal area are reported as "seal failures" and are not considered when determining pouch strength. The average value of 18 replicates is reported.

The pouch strength is measured after having stored the water-soluble pouches for 7 days at ambient conditions, and pre-conditioned for 16-24 h at 23 °C / 50% RH. The method is performed in a room environment between 40-50% relative humidity (RH) and 22-24 °C. Water-soluble pouches are tested within one hour of taking them out of the preconditioning.

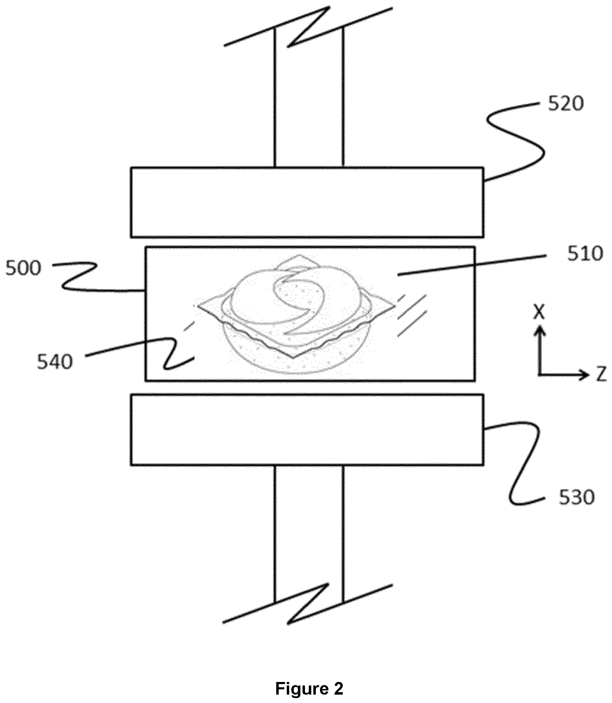

Figure 2 shows a schematic illustration of the basic configuration of the pouch strength test. To measure pouch strength, a pouch 510 is enclosed in a plastic bag consequently sealed 500 (150 mm by 124 mm with closure, 60 microns thick - e.g., Raja grip RGP6B) to prevent contamination of working environment upon pouch rupture. The pouch 510 is centered in the bag, and placed between two compression plates 520, 530 of the instrument. The pouch 510 is placed in a flat position, so that the width seal dimension 540 (e.g., smallest dimension within a defined rectangular plane just encompassing the seal area, 41mm in actual pouches tested) is placed horizontally between the compression plates (x-direction) the bottom compartment touching one plate, the at least one superposed compartment touching the other compression plate. The diameter of the compression plates needs to be big enough in order not to pinch the pouch as it deforms (here D=116mm). For the compression, the speed of decreasing the distance between the plates 520 and 530 is set at 225 mm/min. 18 replicates are conducted per test leg, and the average pouch strength data across those 18 replicates is reported.

In general, water-soluble unit dose articles according to the disclosure have a pouch strength of at least 200 N, or at least 300 N, or at least 400 N, as measured according to the Pouch Strength method.

Pouch Dissolution method

This test method describes a water-soluble unit dose article dissolution test, in which the amount of undissolved water-soluble film residues is assessed. More particularly, this method is designed to assess the relative dissolution properties of laundry water-soluble unit dose articles under stressed washing machine conditions. For this method Electrolux Programmable Washing machines type W565H comprising a ballast load with a mix of Cotton and Poly cotton pieces (from Calderon Textiles, LLC 6131 W 80th Street Indianapolis, IN 46278) were used. Ballast loads are comprised of cotton and polycotton knit, double-ply swatches approximately 50x50cm in size.

*Orange unit-dose articles (pouches)*

Orange fabric is purchased from the Lubrizol-Equest company and is desized before use by adding 25 items into a front loading Miele washing machine and running a short cotton cycle at 60°C (approximate duration of 90 min) with 50 g of Ariel sensitive powder and a water hardness of 15 grains per gallon (gpg), followed by running 1 more short cotton cycles at 60°C (approximate duration of 90 min) with no detergent and a water hardness of 15 gpg, followed by tumble drying.
The orange fabrics are then cut into 48X48 cm pieces, folded in half, cut in half and sawn to the sides into 4 equivalent pouches of 22X22 cm with the top side open. One test product of a pre-conditioned water-soluble unit dose article is placed at the bottom right corner of the orange pouch, and the pouch is stitched closed. The water-soluble unit dose article is pre-conditioned for a minimum of 2 weeks at 23°C, 50% RH before testing.
Load: 4 loads of 3 kg of mixed cotton (13 pieces) and polycotton (10 pieces) were de-sized before use by washing in a short cotton cycle at 60°C with 79 g of Ariel Professional detergent at a water hardness of 15 gpg, followed by another short cotton cycle at 60°C without any detergent at a water hardness of 15 gpg, and finally tumble-dried. Each load of 3.0 kg is pre-treated 2 times by washing with 4 Ariel pods in the "prewet" cycle, followed by a wash without detergent in the "dissolution program" described below, and finally tumble-dried.
The Electrolux W565 programmable washing machines were programmed with 2 programs. The first program was designed to equally wet the load (pre-wet program). The second program (dissolution program) was utilized to simulate 15 min of a Western Europe stressed cycle setting, followed by pumping out the water and starting a spin of 3min at 1100 rpm. Washing machine parameters are summarized in the table below.

| | | Pre-wet program | Dissolution program |
|---|---|---|---|
| **Wash** | **Time** | 5 min | 15 min |
| | **Motor rotation** | 49 rpm | 59 rpm |
| | **Water intake** | 12 L | 13.4 L |
| | **Heating** | 20°C | 20°C |
| | **Water Hardness** | 15 gpg | 15 gpg |
| | **Motor action time clockwise** | 28 s | 20 s |
| | **Motor resting time** | 12 s | 20 s |
| | **Motor action time Counterclockwise** | 28 s | 28 s |
| **Drain** | **Draining time** | 1 min | 20 s |
| | **Motor rotation** | 20 rpm | 49 rpm |
| **Extraction** | **Time** | 30 s | 3 min |
| | **Motor rotation** | 900 rpm | 1100 rpm |

A load consisting of 13 pieces of 50X50 cm of cotton and 10 pieces of 27X27 cm of polycotton (weighed at 3.0 +/- 0.15 kg) was evenly introduced in the Electrolux W565 washing machine and the pre-wet program was run 2 times.
After the pre-wet program, the wet ballast was taken out of the drum and 4 orange pouches containing each a different test leg water soluble unit dose article were aligned at the bottom of the drum, hence 4 different test products are tested at once in the same washing machine in order to render the testing environment as reproducible as possible across the test legs. 10 g of suds suppressor (Dowsil GP-4314 silicone suds suppressor, commercially available from the Dow Corning Company) was added in the dispenser, and the wet load was placed on top of the orange pouches, without allowing the drum to move. The dissolution program was initiated. At the end of the full program, the orange pouches were transferred to a grading room (equipped with D65 lighting conditions) to be assessed for residues by expert graders.

The orange pouches are cut and graded visually, within 30 min after the end of each run, according to a scale of 0 to 7 (0=no film residue, 7=full pouch residue). The final score is calculated as the average of 4 external replicates, i.e., 4 different washing machine runs, and repeated 2 times (average of 8 scores).

**Example 1**

A film made from a blend of PVOH homopolymer (partially hydrolyzed polyvinyl acetate) and an anionic monomer-modified PVOH copolymer (partially hydrolyzed polyvinyl acetate-co-itaconate) according to the invention (EX 1 Film) was made and tested for residue according to the Dissolution Chamber test using room temperature water for 5 minutes, and for tensile strength (3 replicates). Comparative example (CX) films, not according to the invention, were also made and similarly tested for residue according to the Dissolution Chamber test using room temperature water for 5 minutes, and tensile strength. The films included plasticizers and small amounts of starch. The EX 1 film included 20.4 PHR glycerol, 5.9 PHR dipropylene glycol, 12.6 PHR sorbitol, and 2.8 PHR starch. The CX 1 and 2 films included PVOH copolymers based on monomethyl maleate (sodium salt) monomer units while the CX 3 and 4 films included PVOH copolymers based on 2-acrylamido-2-methylpropanesulfonic acid (sodium salt) monomer units, according to Examples 7 and 8 of U.S. Patent No. 10,913,832 B2. All films were cast to a thickness of 76 microns when dried. The homopolymer resin of CX 1 to CX 4 is expected to have a biodegradation degree at 28 days of at least 60%. Results are shown in the table below. EX 1 film also showed a favorable disintegration time of about 30 seconds and dissolution time of about 58 seconds according to MSTM-205 in 5 °C water.

| | | EX 1 | CX 1 | CX 2 | CX 3 | CX 4 |
|---|---|---|---|---|---|---|
| PVOH homopolymer | Content (% of PVOH resins) | 85 | 80 | 90 | 80 | 90 |
| | viscosity (cP) | 15 | 12.5 | 12.5 | 12.5 | 12.5 |
| | DH | 79 | 86 | 86 | 86 | 86 |
| anionic PVOH copolymer | Content (% of PVOH resins) | 15 | 20 | 10 | 20 | 10 |
| | Viscosity (cP) | 6 | 23.5 | 23.5 | 24.3 | 24.3 |
| | DH | 77 | 92 | 92 | 88 | 88 |
| | % modification | 1.25 | 1.82 | 1.82 | 1.77 | 1.77 |
| Residue (%) | | 54 | 63.0 | 61.4 | 65.1 | 63.1 |
| Tensile Strength (MPa) | | 38.76 | 31.21 | 30.27 | 35.28 | 33.69 |

The EX 1 film according to the invention demonstrated a beneficial combination of lower residue and higher tensile strength, compared to similar films outside the scope of the invention. The EX 1 film according to the invention achieved these results, while also achieving a higher biodegradation extent at 28 days according to OECD 301B. The EX 1 film was also tested for residue in cold water (5 °C), yielding a value of 64% after 5 minutes and 53.4% after 10 minutes. A film similar to EX 1 film was made with a 50/50 blend of the same resins, yielding a residue value in cold water (5 °C) of 63% and a tensile strength of 32 MPa.

**Example 2**

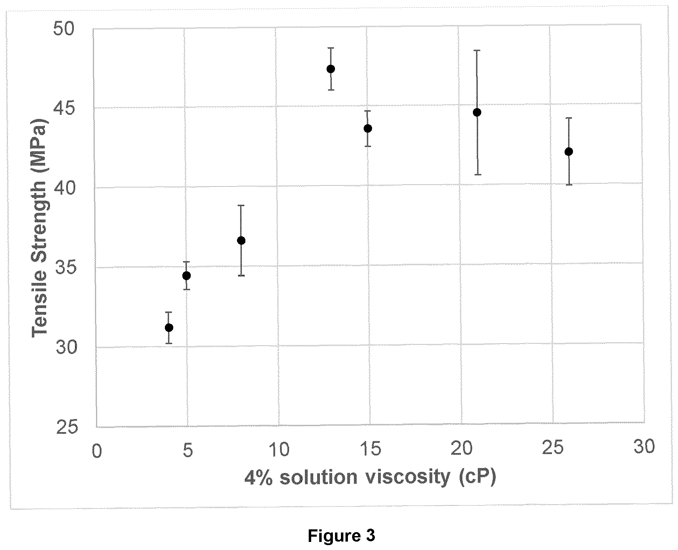

A series of single-resin films were made from polyvinyl alcohol homopolymer resins having varying viscosities (4% solution viscosity at 20 °C). The tensile strength was measured for the films, and the results are shown in Figure 3. The results show that for the homopolymer resins, tensile strength increased with increasing viscosity up to about 10 cP, and then plateaued.

**Example 3**

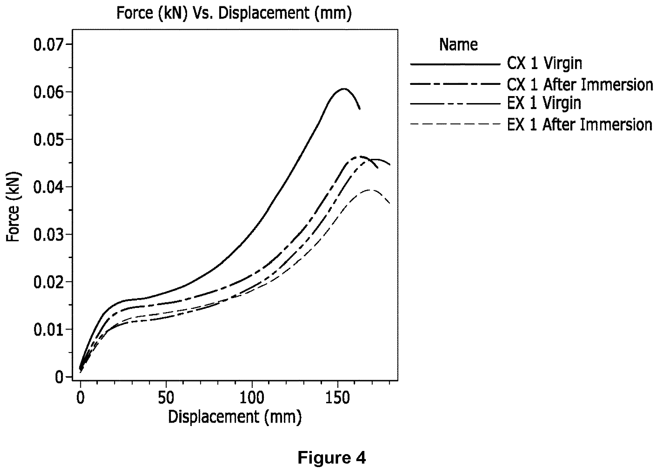

A batch of film according to the formulation of EX 1 film described in Example 1 above was prepared. As a comparative film (CX 5) a film was made from a blend of 40% of a ~4 mol.% monomethyl maleate-modified PVOH copolymer having a viscosity of about 15 cP and degree of hydrolysis of about 90% and 60% of a PVOH homopolymer having a viscosity of about 22 cP and DH of about 87%. The film also contained about 12.5% glycerin, 7% sorbitol, 3% trimethylolpropane and 2% modified starch filler. All films were cast to a thickness of 76 microns when dried. The films were tested for mechanical properties according to ASTM D 882 ("Standard Test Method for Tensile Properties of Thin Plastic Sheeting") or equivalent using an INSTRON tensile testing apparatus. Tests were conducted in the standard laboratory atmosphere of 23±2.0°C and 35±5% relative humidity. Five replicates of 2.54 cm wide samples of each film type were tested before and after immersion in liquid laundry detergent, to gauge the detergent's effect on film strength. The detergent was Fairy Non Bio brand liquid detergent, and the immersion was conducted for 4 weeks at 35 °C. Results are shown in Figure 4, wherein the film according to the invention EX 1 substantially retained its physical strength properties after exposure to the liquid detergent, compared to the comparative film CX 5.

## Example 4

PVOH homopolymer and copolymer resins were tested for biodegradability according to OECD 301B. The results are tabulated below.

| Resin properties | | Biodegradation rate (from $O_2$ consumption) at 28 days (%) | Biodegradation rate (from $O_2$ consumption) at 60 days (%) |
|---|---|---|---|
| Nominal viscosity (cP)- and DH (mol%) | Modification type and degree | | |
| 15-79 | None | 74.3 | |
| 21-87 | None | 73.4 | 93.9 |
| 22-88 | None | 83.7 | |
| 28-98 | None | 96.3 | |
| 5-74 | None | 83.3 | |
| 5-88 | None | 93.9 | |
| 6-77 | Itaconic acid, 1.25% | | 100 |
| 18-90 | Monomethyl maleate, 4% | | 70.7 |

Various unmodified (homopolymer) resins were also tested for biodegradation rate at 28 days and rates of biodegradation ranging from 74% to greater than 96% were observed. For modified resins an approximately 30% increase in biodegradation is observed at 60 days as compared to 28 days. Selection of the types and amounts of unmodified (homopolymer) and modified (copolymer) resins based on the individual resin biodegradation performance can be used to tailor the blend in accordance with the disclosure to have a target biodegradation rate for a selected time frame.

## Example 5

The interaction upon initial dissolution in wash water between a soluble unit dose liquid laundry detergent formulation and water-soluble films according to or outside the scope of the invention has been studied following the gelling factor test method described herein.

Table 1 shows a liquid detergent composition; all components are 100% active. The liquid detergent composition was prepared through mixing of the individual detergent components in a batch type process.

Table 2 describes resin blends comprising a film according to the invention and a film outside the scope of the invention. The films were evaluated according to the Gelling Factor and Pouch Dissolution tests described herein. "Comparative Film" represents the outer films of Ariel All-in one product, as commercially available in the UK in January 2024.

Table 3 shows the gelling factor and pouch dissolution data obtained using the test methods described herein. For the gelling factor data, the liquid detergent of Table 1 was combined with films comprising the water-soluble resins of Table 2. For the pouch dissolution test, 3-compartment pouches, following the Ariel All-in one superposed design, as commercially available in the UK in January 2024, made of a film comprising one of the water-soluble resins of Table 2 and comprising the detergent composition of Table 1 were tested. It can be seen that combinations of the liquid detergent composition with a water-soluble film that yielded a low gelling factor G according to the invention also yielded improved pouch dissolution, and hence reduced film residue risk on fabrics at the end of a wash cycle, compared to the combination of the liquid detergent composition with the comparative film.

**Table 1**

| Detergent Component | Weight % |
|---|---|
| Neodol 24/7 ethoxylated alcohol nonionic surfactant | 3.2 |
| Linear alkylbenzene sulphonic acid | 27.6 |
| A24E3S | 7.9 |
| Citric acid | 0.7 |
| Fatty acid | 11.5 |
| Ethoxylated polyethyleneimine* | 1.5 |
| Zwitterionic polyamine** | 1.5 |
| HEDP | 0.7 |
| FWA 49 | 0.35 |
| Antifoam (AF8017) | 0.25 |
| 1,2-propanediol | 15.6 |
| Glycerol | 5.0 |
| Monoethanolamine (pH trimming agent) | 9.7 |
| $K_2SO_3$ | 0.4 |
| $MgCl_2$ | 0.1 |
| Water | 10.1 |
| Hydrogenated castor oil | 0.1 |
| Minors (perfume, dyes, antioxidant, preservative...) | Balance to 100% |
| pH (as 10% aqueous solution) | 7.4 |
| * ethoxylated polyethyleneimine having an average degree of ethoxylation of 20 per EO chain and a polyethyleneimine backbone with MW of about 600 <br> ** Lutensit Z96: partially sulfate polyethoxylated hexamethylenediamine, as available from the BASF company | |

**Table 2**

|  | Inventive Film | Comparative Film |
|---|---|---|
| PVOH Homopolymer | | |
| DH | 79% | 87% |
| Viscosity | 15 cP | 21 cP |
| Weight% (% of total PVOH in film) | 85% | 60% |
| PVOH Copolymer | | |
| Type | Itaconic acid-modified | Monomethyl maleate-modified |
| DH | 77% | 90% |
| Viscosity | 6 cP | 17 cP |
| Weight% (% of total PVOH in film) | 15% | 40% |

**Table 3**

|  | Inventive Film | Comparative Film |
|---|---|---|
| Gelling Factor | 1.09 | 1.71 |
| Pouch Dissolution | 1.3 | 2.9 |

Table 4 shows gelling factor data, as measured according to the test method described herein, for several commercially available liquid detergent formulations combined with the comparative film of Table 2 or with a commercially available film, M8630 (MonoSol, LLC). It can be seen that all of the combinations of a commercially available liquid detergent formulation with the comparative film or with M8630 yielded a higher (i.e., worse) gelling factor G compared to the combinations of the liquid detergent composition of Table 1 and the inventive film of Table 2.

**Table 4**

| | Gelling Factor (G) | |
| --- | --- | --- |
| **Commercially Available Liquid Detergent** | **Comparative Film** | **M8630** |
| Persil Unilever 3in1 BIO blue | 3.45 | 3.34 |
| Persil Unilever 3in1 BIO violet | 2.51 | 4.07 |
| Persil Unilever 3in1 BIO white | 3.06 | 2.57 |
| Persil Henkel 4in1 Discs Universal Dark Blue | 2.53 | 2.55 |
| Persil Henkel 4in1 Discs Universal Green | 3.04 | 3.5 |
| Persil Henkel 4in1 Discs Universal Light Blue | 3.04 | 3.91 |
| Persil Henkel 4in1 Discs Universal White | 1.73 | 2.37 |

Without wishing to be bound by theory, it is believed that the gelling factor can be affected by factors including, but not limited to, properties of the water-soluble resin or resins comprising the film, properties of additives comprising the film, and properties of the composition (e.g., a detergent or non-detergent composition). Film properties that can affect the gelling factor include, but are not limited to, the average degree of hydrolysis and viscosity of the polyvinyl alcohol polymer or polymers comprising the film. For a film comprising a resin blend (for instance, a blend of two or more polyvinyl alcohol polymers), the gelling factor can be affected by one or more of (1) the degree of hydrolysis of the individual component polymers, (2) the viscosity of the individual component polymers, (3) the average degree of hydrolysis of the resin blend, (4) the average viscosity of the resin blend, and (5) the relative amounts of the component polyvinyl alcohol polymers. The type and average degree of anionic substitution of a polyvinyl alcohol copolymer can also impact gelling factor.

Without wishing to be bound by theory, it is believed that resins having a lower degree of hydrolysis can reduce or prevent gelling, due in part to the resin having a lower affinity for water (in view of the lower content of hydroxyl functional groups), resulting in reduced increase in viscosity when the film contacts a composition, such as a composition that includes a surfactant. Without intending to be limiting, polyvinyl alcohol polymers having an average degree of hydrolysis of between 70% and 80% are thought to reduce or prevent strong gel formation. Without intending to be bound by theory, it is believed that resins having a lower viscosity, indicating a lower molecular weight polymer, can reduce or prevent gelling due in part to a lower degree of polymer entanglement. Without intending to be limiting, polyvinyl alcohol polymers having an average 4% solution viscosity of between 3 cP and 20 cP, or between 5 cP and 15 cP, are thought to reduce or prevent strong gel formation. Without intending to be bound by theory, it is believed that polyvinyl alcohol polymers having anionic modification can reduce or prevent gelling in part by increasing steric hindrance, favoring chain disentanglement and decreased polymer-surfactant interaction. Types of anionic modification that are thought to reduce or prevent gel formation include, but are not limited to, carboxylates and dicarboxylates; maleate modification or itaconate modification are particularly contemplated. However, it is believed that excessive anionic content can promote gel formation, for instance by increasing the extent of water uptake by the film. As such, when present, an average degree of anionic modification of between 1% and 3% is particularly contemplated to reduce or prevent strong gel formation.

Selection of secondary film components can also affect gelling factor between a film and a composition, such as a detergent composition or other composition, for instance a personal care composition. Without wishing to be bound by theory, it is believed that the presence of one or more plasticizers in the water-soluble film can reduce or prevent gelling upon initial dissolution of the polymeric resin of the water-soluble film in presence of a surfactant of the composition, for instance by serving as a dissolution aid. It is also believed that the presence of residual water in the water-soluble film can help reduce or prevent gelling upon initial dissolution of the resin, in part by reducing resin dissolution time. A water content in a range of from 4% to 15%, or from 5% to 10%, as measured by Karl Fischer titration, is particularly contemplated.

The composition can be, for instance, a detergent composition such as a laundry detergent composition, an automatic dishwashing composition or a hard surface cleaning composition. Alternatively, the composition can be a personal care composition, as described herein, such as a shampoo, conditioner, soap, or body wash.

The composition can comprise a solid, a liquid or a mixture thereof. The term "liquid" includes a gel, a solution, a dispersion, a paste, or a mixture thereof. The solid may be a powder composition, and the powder composition can comprise solid particulates or a single homogenous solid. In some examples, the powder composition comprises particles, i.e., the powder composition can comprise individual solid particles rather than being a single homogenous solid. The particles may be free-flowing or may be compacted. Preferably the composition is a liquid composition. Without wishing to be bound by theory, a liquid composition is believed to diffuse faster (compared to a solid composition) into the wash solution upon initial rupture of the water-soluble film, reducing the time spent, hence degree of gel formation through interaction with the dissolved water-soluble film polymeric resin, at the composition-film-water interface.

Example compositions, including laundry detergent compositions and personal care compositions, can comprise a non-soap surfactant, wherein the non-soap surfactant can comprise an anionic non-soap surfactant and a non-ionic surfactant. In some examples, the composition comprises between 10% and 60%, or between 15% and 55%, or between 20% and 45%, by weight of the composition, of the non-soap surfactant. Without wishing to be bound by theory, it is believed that lower non-soap surfactant levels can reduce interaction between the surfactant and water-soluble polymeric resin at the composition-film-water interface upon initial rupture of the water-soluble film. Example non-soap anionic surfactants include, but are not limited to, linear alkylbenzene sulphonates, alkyl sulphate anionic surfactants, and mixtures thereof. Example linear alkylbenzene sulphonates include $C_{10}$-$C_{16}$ alkyl benzene sulfonic acids and $C_{11}$-$C_{14}$ alkyl benzene sulfonic acids. "Linear" as used herein refers to a linear alkyl group. Example alkyl sulphate anionic surfactant include alkoxylated alkyl sulphates, non-alkoxylated alkyl sulphates, and mixtures thereof. Example alkoxylated alkyl sulphate anionic surfactants include ethoxylated alkyl sulphate anionic surfactants. Example alkyl sulphate anionic surfactants include ethoxylated alkyl sulphate anionic surfactants with a mol average degree of ethoxylation from 1 to 5, from 1 to 3, or from 2 to 3. Example alkyl sulphate anionic surfactants include non-ethoxylated alkyl sulphates and ethoxylated alkyl sulphates, wherein the mol average degree of ethoxylation of the alkyl sulphate anionic surfactant is from 1 to 5, from 1 to 3, or from 2 to 3. The alkyl fraction of the alkyl sulphate anionic surfactant can be derived, for example, from fatty alcohols, oxo-synthesized alcohols, Guerbet alcohols, or mixtures thereof. In some examples, the non-ionic surfactant is selected from alcohol alkoxylates, oxo-synthesised alcohol alkoxylates, Guerbet alcohol alkoxylates, alkyl phenol alcohol alkoxylates, and mixtures thereof. Without wishing to be bound by theory, it is believed that selection of non-soap surfactant type and formulated ratio between non-soap surfactants can reduce or prevent strong gel formation at the composition-film-water interface, for instance by enabling faster diffusion of the surfactant, sterically hindering surfactant-polymer packing, and/or reducing the time and degree of interaction with dissolved water-soluble polymeric resin.

In general, a person formulating a water-soluble film can choose a combination of polymers to seek to achieve a balance between film properties, including but not limited to mechanical properties, strength, dissolution, and sealability. While selecting one or more polymers according to criteria described above may be preferred to deliver one or more of these film properties, careful attention needs to be paid to the relative content of polymers in the film in order to prevent formation of strong gels upon initial contact with the dissolving water and composition.

In some examples, the composition comprises between 1% and 20%, between 1.5% and 15%, between 2% and 10%, or between 2.5% and 8% by weight of the composition of soap, in some examples a fatty acid salt, in some examples an amine neutralized fatty acid salt, wherein in some examples the amine is an alkanolamine for example selected from monoethanolamine, diethanolamine, triethanolamine or a mixture thereof, in some examples monoethanolamine. Without wishing to be bound by theory higher levels of fatty acid are less preferred as they are found to thicken viscosity of the composition upon initial contact with incoming wash water, slowing down product diffusion into the wash water hence enabling more time for interaction between surfactant and water-soluble polymeric resin. A minimal level of fatty acid however may be required to protect an overall surfactant system from water hardness in the wash solution.

Without wishing to be bound by theory, it is believed that high water content in the composition can lead to premature dissolution of the water-soluble polymeric resin at the inner side (i.e., composition-facing side) of the water-soluble film, inducing preliminary gel formation within the enclosed composition prior to exposure of the unit dose article to water. However, it is further believed that some water content in the composition can facilitate initial dissolution, and as such faster diffusion, of actives comprising the composition, such as surfactants, reducing time to interact and reducing formation of gels with dissolved polymeric resin.

In some examples, the composition is a liquid composition comprising a non-aqueous solvent selected from 1,2-propanediol, dipropylene glycol, tripropyleneglycol, glycerol, sorbitol, polyethylene glycol and a mixture thereof. Polyol based organic solvents are particularly contemplated for use in the present invention. In some examples, the liquid composition comprises between 10% and 40%, or between 15% and 30%, by weight of the liquid composition, of the non-aqueous solvent. Without wishing to be bound by theory, it is thought that higher levels of such organic solvents, such as polyol solvents, can help improve surfactant solubility, increasing surfactant diffusion kinetics into the wash water. It is further believed that excessive organic solvent content in the composition can over-plasticize the water-soluble film, possibly compromising unit dose article strength.

In some examples, the composition has a pH between 6 and 10, between 6.5 and 8.9, or between 7 and 8, wherein the pH of the composition is determined as the pH of a 10 wt.% solution of the composition in demineralized water at 20°C. Without wishing to be bound by theory, it is believed that a composition having a pH below 6 or above 10 can negatively impact water-soluble film dissolution kinetics, reducing diffusion kinetics in the wash water and as such allowing more time for surfactant-water-soluble polymeric resin interaction.

The liquid composition can be Newtonian or non-Newtonian. In some examples, the liquid composition is non-Newtonian. Without wishing to be bound by theory, a non-Newtonian liquid has properties that differ from those of a Newtonian liquid; more specifically, the viscosity of non-Newtonian liquids is dependent on shear rate, while a Newtonian liquid has a constant viscosity independent of the applied shear rate. Without intending to be bound by theory, it is believed that the decreased viscosity upon shear application for non-Newtonian liquids can further facilitate liquid composition dissolution and as such reduce or prevent gel formation with the dissolved water-soluble polymeric resin. The liquid composition described herein can have any suitable viscosity depending on factors such as formulated ingredients and purpose of the composition.

The foregoing description is given for clearness of understanding only, and no unnecessary limitations should be understood therefrom, as modifications within the scope of the invention may be apparent to those having ordinary skill in the art.

Throughout the specification, where compositions are described as including components or materials, it is contemplated that the compositions can also consist essentially of, or consist of, any combination of the recited components or materials, unless described otherwise. Likewise, where methods are described as including particular steps, it is contemplated that the methods can also consist essentially of, or consist of, any combination of the recited steps, unless described otherwise. The invention illustratively disclosed herein suitably may be practiced in the absence of any element or step which is not specifically disclosed herein.

The practice of a method disclosed herein, and individual steps thereof, can be performed manually and/or with the aid of or automation provided by electronic equipment. Although processes have been described with reference to particular embodiments, a person of ordinary skill in the art will readily appreciate that other ways of performing the acts associated with the methods may be used. For example, the order of various of the steps may be changed without departing from the scope or spirit of the method, unless described otherwise. In addition, some of the individual steps can be combined, omitted, or further subdivided into additional steps.

All patents, publications and references cited herein are hereby fully incorporated by reference. In case of conflict between the present disclosure and incorporated patents, publications and references, the present disclosure should control.

## Claims

1. A water-soluble film, comprising:

   a polyvinyl alcohol resin blend comprising a PVOH homopolymer consisting essentially of vinyl alcohol monomer units and vinyl acetate monomer units and a PVOH copolymer comprising anionic monomer units, vinyl alcohol monomer units and vinyl acetate monomer units,
   wherein the PVOH homopolymer has a viscosity in a range of 10 cP to 30 cP, or 10 cP to 20 cP, and a degree of hydrolysis in a range of 60% to 84%, or 65% to 84%, or 68% to 84%, or 74% to 84%, or 74% to 79%, or 74% to 79%;
   wherein the PVOH copolymer has a viscosity in a range of 5 cP to less than 10 cP, or 5 cP to 9 cP, and degree of hydrolysis in a range of 60% to 89%, 60% to 84%, or 65% to 84%, or 68% to 84%, or 74% to 84%, or 74% to 89%, or 74% to 79%, and an anionic monomer content in a range of 0.1 mol% to 4 mol%, or 0.5 mol% to 4 mol%, or 3 mol% to 4 mol%, or 1 mol% to 2 mol%, or less than 4 mol%, less than 3 mol%, less than 2 mol%, or less than 1.77 mol%, or less than 1.5 mol%;
   wherein the PVOH homopolymer is present in an amount in a range of 10% to 90%, or 51% to 90%, or 70% to 90%, by weight of the polyvinyl alcohol resin blend; and
   wherein the PVOH copolymer is present in an amount in a range of 10% to 90%, or 10% to 49%, or 10% to 30%, by weight of the polyvinyl alcohol resin blend.

2. The water-soluble film of claim 1, wherein the anionic monomer unit of the PVOH copolymer is derived from one or more members in the group of monocarboxylic acid vinyl monomers, their esters and anhydrides, dicarboxylic monomers having a polymerizable double bond, their esters and anhydrides, vinyl sulfonic acid monomers, and alkali metal salts of any of the foregoing.

3. The water-soluble film of claim 2, wherein the anionic monomer unit of the PVOH copolymer is derived from one or more members in the group of monocarboxylic acid vinyl monomers, their esters and anhydrides, dicarboxylic monomers having a polymerizable double bond, their esters and anhydrides, and alkali metal salts of any of the foregoing.

4. The water-soluble film of claim 3, wherein the anionic monomer unit of the PVOH copolymer is derived from one or more members in the group of itaconic acid, monomethyl itaconate, dimethyl itaconate, itaconic anhydride, alkali metal salts thereof, and esters thereof.

5. The water-soluble film of claim 3, wherein the anionic monomer unit of the PVOH copolymer is derived from one or more members in the group of monomethyl maleate, dimethyl maleate, methacrylate, maleic anhydride, and combinations thereof.

6. The water-soluble film according to any one of the preceding claims, wherein an average degree of hydrolysis of the polyvinyl alcohol resin blend is less than 84%, or less than 80%, or less than 75%, or in a range of 74% to 85%.

7. The water-soluble film according to any one of the preceding claims, wherein the difference between the degree of hydrolysis of the PVOH homopolymer and the degree of hydrolysis of the PVOH copolymer, expressed as |DHH-DHC|, is less than 10%, or less than 5%.

8. The water-soluble film according to any one of the preceding claims, wherein an average viscosity of the polyvinyl alcohol resin blend is at least 9 cP, or at least 10 cP, or at least 12 cP, or in a range of 9 cP to 15 cP, or 10 cP to 15 cP, or 12 cP to 14 cP.

9. The water-soluble film according to any one of the preceding claims, wherein the film has a tensile strength of at least 36 MPa, or at least 38 MPa, or at least 40 MPa.

10. The water-soluble film according to any one of the preceding claims, wherein the film has a residue value of 60 wt.% or less as measured by the Dissolution Chamber Test after 5 minutes at room temperature, or 58 wt.% or less, or 56 wt.% or less, or 54 wt.% or less.

11. The water-soluble film according to any one of the preceding claims, wherein the film has a residue value of 70 wt.% or less as measured by the Dissolution Chamber Test after 10 minutes at 5°C, or 68 wt.% or less, or 66 wt.% or less, or 64 wt.% or less.

12. The water-soluble film according to any one of the preceding claims, wherein the film has a dissolution time of less than 120 seconds, or 70 seconds or less, or less than 60 seconds according to MSTM-205 at 5°C for a 76 micron thick film.

13. The water-soluble film according to any one of the preceding claims, wherein the polyvinyl copolymer has a biodegradation rate of at least 60% after 60 days, or at least 50% after 28 days or at least 60% after 28 days according to OECD 301B testing.

14. The water-soluble film according to any one of the preceding claims, wherein the polyvinyl alcohol resin blend has a biodegradation rate of at least 60% after 60 days, or at least 60% after 28 days according to OECD 301B testing.

15. The water-soluble film according to any one of the preceding claims, wherein the film has a biodegradation rate of at least 60% after 60 days, or at least 60% after 28 days according to OECD 301B testing.

16. The water-soluble film according to any one of the preceding claims, wherein the polyvinyl alcohol resin blend is present in an amount in a range of about 50% to about 95%, or about 50% to about 80%, or about 60% to about 75%, by weight of the water-soluble film.

17. The water-soluble film according to any one of the preceding claims, wherein the film comprises one or more components selected from the group consisting of plasticizers, plasticizer compatibilizers, lubricants, release agents, fillers, extenders, crosslinking agents, antiblocking agents, antioxidants, detackifying agents, antifoams, nanoparticles, bleaching agents, aversive agents, surfactants, and combinations of any of the foregoing.

18. The water-soluble film according to claim 17, wherein the film comprises one or more plasticizers in an amount in a range of between 5% to about 50%, or about 10% to about 40%, or about 20% to about 30%, by weight of the film.

19. The water-soluble film according to claim 18, wherein the one or more plasticizers are selected from polyols, sugar alcohols, and mixtures thereof.

20. The water-soluble film according to claim 19, wherein polyols are selected from glycerol, diglycerin, ethylene glycol, diethylene glycol, triethyleneglycol, tetraethylene glycol, polyethylene glycols up to 400 MW, neopentyl glycol, 1,2-propylene glycol, 1,3-propanediol, dipropylene glycol, polypropylene glycol, 2-methyl-1,3-propanediol, trimethylolpropane, polyether polyols, and mixtures of any of the foregoing, and sugar alcohols are selected from isomalt, maltitol, sorbitol, xylitol, erythritol, adonitol, dulcitol, pentaerythritol, mannitol and mixtures of any of the foregoing.

21. The water-soluble film according to claim 20, wherein the plasticizer includes a mixture of glycerol, dipropylene glycol, and sorbitol.

22. The water soluble film according to any one of the preceding claims, wherein the film is **characterized by** having a gelling factor of less than 1.25, or less than 1.2, or less than 1.15, according to the Gelling Factor method described herein.

23. A water-soluble unit dose article comprising not more than two films, wherein at least one film is a water-soluble film according to any one of the preceding claims, wherein the unit dose article comprises a compartment and optionally a composition contained in the compartment.

24. A water-soluble unit dose article comprising a water-soluble film according to any one claims 1 to 22, wherein the unit dose article comprises a compartment and a composition contained in the compartment, wherein the composition is selected from shampoos, body washes, other personal care compositions, insecticides, fungicides, herbicides, pesticides, miticides, repellants, attractants, defoliaments, plant growth regulators, fertilizers, bactericides, micronutrients, and trace elements, mixtures of any of the foregoing.

25. The water-soluble unit dose article according to claim 23 or 24, wherein the water-soluble film according to any one of the preceding claims forms one wall of the compartment and a second water-soluble film forms a second wall of the compartment, wherein the second water-soluble film is chemically different from the first water-soluble film.

26. A water-soluble unit dose article comprising a water-soluble film according to any one of claims 1 to 22, wherein the unit dose article comprises a compartment and a composition contained int eh compartment, , , wherein the composition is selected from light duty liquid detergent compositions, heavy duty liquid detergent compositions, bleaching compositions, and mixtures of any of the foregoing, with the proviso that one or more of the following conditions is true:

(a) the PVOH homopolymer is present in an amount in a range of below 70% by weight of the polyvinyl alcohol resin blend;
(b) the PVOH homopolymer has a degree of hydrolysis of less than 70%;
(c) the PVOH copolymer is present in an amount in a range of greater than 30% by weight of the polyvinyl alcohol resin blend when the copolymer is an itaconic acid-modified copolymer;
(d) the PVOH copolymer is not an itaconic acid modified copolymer;
(e) when the unit dose article comprises three or more films and the unit dose article comprises at least two compartments in a superposed configuration, then none of the three or more films comprises a PVOH polymer blend of (i) from 50 wt.% to 99 wt.%, by weight of the blend, of a PVOH homopolymer having a degree of hydrolysis in a range of from 70 mol% to 85 mol% and (ii) from 1 wt.% to 50 wt.%, by weight of the blend, of an anionic modified PVOH, wherein the PVOH polymer blend is greater or equal to 50 wt.% of the PVOH film;
(f) the water-soluble film according to any one of the preceding claims is not a solution-cast film.

**Figure 1**

**Figure 2**

**Figure 3**

Figure 4

Europäisches
Patentamt
European
Patent Office
Office européen
des brevets

## EUROPEAN SEARCH REPORT

**Application Number**

EP 24 17 5456

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2017/180870 A1 (PROCTER & GAMBLE [US]) 19 October 2017 (2017-10-19) * Film 1; examples; table 1 * ----- | 1-26 | INV. C08J5/18 C08L29/04 C11D17/04 |
| A | WO 2016/061025 A1 (MONOSOL LLC [US]) 21 April 2016 (2016-04-21) * examples 6-11; table 1 * ----- | 1-26 | |
| A | WO 2017/180867 A1 (PROCTER & GAMBLE [US]) 19 October 2017 (2017-10-19) * examples 1-12; tables 2,3 * ----- | 1-26 | |
| A | WO 2023/183146 A1 (MONOSOL LLC [US]) 28 September 2023 (2023-09-28) * Films 2, 3, 4; table 1 * ----- | 1-26 | |

**TECHNICAL FIELDS SEARCHED (IPC)**

C08J
C11D
C09J
C08L

The present search report has been drawn up for all claims

| Place of search | Date of completion of the search | Examiner |
|---|---|---|
| Munich | 16 October 2024 | Frison, Céline |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 5456

This annex lists the patent family members relating to the patent documents cited in the above-mentioned European search report.
The members are as contained in the European Patent Office EDP file on
The European Patent Office is in no way liable for these particulars which are merely given for the purpose of information.

16-10-2024

| Patent document cited in search report | Publication date | Patent family member(s) | Publication date |
|---|---|---|---|
| WO 2017180870 A1 | 19-10-2017 | CA 3019343 A1 | 19-10-2017 |
| | | CN 109072143 A | 21-12-2018 |
| | | EP 3443059 A1 | 20-02-2019 |
| | | ES 2802607 T3 | 20-01-2021 |
| | | HU E049553 T2 | 28-10-2020 |
| | | JP 6665316 B2 | 13-03-2020 |
| | | JP 2019513643 A | 30-05-2019 |
| | | PL 3443059 T3 | 02-11-2020 |
| | | RU 2690847 C1 | 06-06-2019 |
| | | US 2017298216 A1 | 19-10-2017 |
| | | US 2020199344 A1 | 25-06-2020 |
| | | WO 2017180870 A1 | 19-10-2017 |
| WO 2016061025 A1 | 21-04-2016 | AR 103002 A1 | 12-04-2017 |
| | | AU 2015333762 A1 | 27-04-2017 |
| | | BR 112017007653 A2 | 19-12-2017 |
| | | CN 107001755 A | 01-08-2017 |
| | | EP 3207081 A1 | 23-08-2017 |
| | | ES 2858513 T3 | 30-09-2021 |
| | | HU E053570 T2 | 28-07-2021 |
| | | JP 6774418 B2 | 21-10-2020 |
| | | JP 7372222 B2 | 31-10-2023 |
| | | JP 2017535664 A | 30-11-2017 |
| | | JP 2021014584 A | 12-02-2021 |
| | | KR 20170067865 A | 16-06-2017 |
| | | PL 3207081 T3 | 14-06-2021 |
| | | RU 2017115890 A | 15-11-2018 |
| | | TW 201619272 A | 01-06-2016 |
| | | US 2017226338 A1 | 10-08-2017 |
| | | WO 2016061025 A1 | 21-04-2016 |
| WO 2017180867 A1 | 19-10-2017 | CA 2964137 A1 | 20-06-2017 |
| | | CN 108884424 A | 23-11-2018 |
| | | EP 3443060 A1 | 20-02-2019 |
| | | JP 6709856 B2 | 17-06-2020 |
| | | JP 2019513641 A | 30-05-2019 |
| | | RU 2690844 C1 | 06-06-2019 |
| | | US 2017298308 A1 | 19-10-2017 |
| | | WO 2017180867 A1 | 19-10-2017 |
| WO 2023183146 A1 | 28-09-2023 | CN 118715269 A | 27-09-2024 |
| | | US 2023303818 A1 | 28-09-2023 |
| | | WO 2023183146 A1 | 28-09-2023 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060081176 A1
- US 6204223 B
- US 4681228 A
- EP 0989803 A1
- US 5558228 A
- US 8333033 B
- US 20140110301
- US 8728593 B
- US 7476325 B
- US 20080185347
- US 20140124454
- US 20060172910 A
- US RE29059 E
- US 20040144682
- US 20060173430 A
- US 3580390 A
- US 20110054111
- US 8163104 B
- US 20070003719
- US 4466431 A
- US 7022656 B
- US 10913832 B2